(19) **Europäisches Patentamt / European Patent Office / Office européen des brevets**

(11) **EP 3 885 967 A1**

(12) **EUROPEAN PATENT APPLICATION**
published in accordance with Art. 153(4) EPC

(43) Date of publication:
**29.09.2021 Bulletin 2021/39**

(21) Application number: **19887883.7**

(22) Date of filing: **28.10.2019**

(51) Int Cl.:
**G06K 9/00** (2006.01)

(86) International application number:
**PCT/CN2019/113611**

(87) International publication number:
**WO 2020/103647 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2018 CN 201811377195**

(71) Applicant: **TENCENT TECHNOLOGY (SHENZHEN) COMPANY LIMITED**
**Shenzhen, Guangdong 518057 (CN)**

(72) Inventors:
• **PENG, Weilong**
  **Shenzhen, Guangdong 518057 (CN)**
• **SHEN, Xiaoyong**
  **Shenzhen, Guangdong 518057 (CN)**
• **CHEN, Yilun**
  **Shenzhen, Guangdong 518057 (CN)**
• **SUN, Yanan**
  **Shenzhen, Guangdong 518057 (CN)**

(74) Representative: **EP&C**
**P.O. Box 3241**
**2280 GE Rijswijk (NL)**

(54) **OBJECT KEY POINT POSITIONING METHOD AND APPARATUS, IMAGE PROCESSING METHOD AND APPARATUS, AND STORAGE MEDIUM**

(57) Disclosed are an object key point positioning method and apparatus, an image processing method and apparatus, and a storage medium. The positioning method comprises: detecting a target object in a current video frame of a target video stream, and acquiring a current detection region of the target object; acquiring a historical detection region corresponding to the target object in a historical video frame of the target video stream; adjusting the current detection region by using the historical detection region, and acquiring a determined current detection region; performing key point positioning on the target object based on the determined current detection region to obtain a first object key point set; acquiring a second object key point set corresponding to the target object in the historical video frame of the target video stream; and stably adjusting the position of the first object key point set according to the position of the second object key point set to obtain the position of a current target object key point set in the current video frame. The present application solves the technical problem in the related art of the low accuracy when detecting an object key point.

FIG. 2

**Description**

This application claims priority to Chinese Patent Application No. 201811377195.6, entitled "OBJECT KEY POINT POSITIONING METHOD AND APPARATUS, IMAGE PROCESSING METHOD AND APPARATUS, AND STORAGE MEDIUM" and filed with the China National Intellectual Property Administration on November 19, 2018, which is incorporated by reference in its entirety.

**FIELD**

This application relates to the field of computers, and in particular, to a method and device for positioning an object key point, an image processing method and device, and a storage medium.

**BACKGROUND**

Currently, for positioning an object key point in a single Photoshop (PS) image, it is required to determine each object key point of a human body by a user or a designer through visual observation, which is time-consuming and laborious and has limited application scenarios. In addition, in a video application, an image region in which an object is located is usually stretched as a whole, in a case that a jitter occurs between previous and subsequent video frames in a video, the accuracy of positioning an object key point is low.

Currently, there is no solution for effectively solving the problem of low accuracy of positioning an object key point.

**SUMMARY**

A method and device for positioning an object key point, an image processing method, an image processing device and a storage medium are provided according to the embodiments of this application, to solve at least the technical problem of low accuracy and low efficiency of detecting an object key point in the conventional technology.

According to an aspect of the embodiments of this application, a method for positioning an object key point is provided. The method includes: detecting a target object in a current video frame of a target video stream, to obtain a current detection region for the target object; acquiring a historic detection region corresponding to the target object in a historic video frame of the target video stream; acquiring a determined current detection region based on the historic detection region and the current detection region; performing key point positioning on the target object based on the determined current detection region, to obtain a first object key point set; acquiring a second object key point set corresponding to the target object in the historic video frame of the target video stream; and performing stabilization on a position of the first object key point set based on a position of the second object key point set, to obtain a position of a current target object key point set in the current video frame.

According to another aspect of the embodiments of this application, an image processing method is further provided. The method includes: detecting a target object in a current video frame of a target video stream, to obtain a current detection region for the target object; acquiring a determined current detection region based on a historic detection region corresponding to the target object in a historic video frame of the target video stream and the current detection region; performing key point positioning on the target object based on the determined current detection region, to obtain a first object key point set; performing stabilization on a position of the first object key point set based on a position of a second object key point set corresponding to the target object in the historic video frame, to obtain a position of a current target object key point set in the current video frame; recognizing a part of the target object from the current video frame based on the position of the current target object key point set; performing adjustment on the recognized part of the target object; and displaying an image of the target object after the adjustment.

According to another aspect of the embodiments of this application, a device for positioning an object key point is further provided. The device includes a detection unit, a first acquisition unit, a second acquisition unit, a positioning unit, a third acquisition unit, and an adjustment unit. The detection unit is configured to detect a target object in a current video frame of a target video stream, to obtain a current detection region for the target object. The first acquisition unit is configured to acquire a historic detection region corresponding to the target object in a historic video frame of the target video stream. The second acquisition unit is configured to acquire a determined current detection region based on the historic detection region and the current detection region. The positioning unit is configured to perform key point positioning on the target object based on the determined current detection region, to obtain a first object key point set. The third acquisition unit is configured to acquire a second object key point set corresponding to the target object in the historic video frame of the target video stream. The adjustment unit is configured to perform stabilization on a position of the first object key point set based on a position of the second object key point set, to obtain a position of a current target object key point set in the current video frame.

According to another aspect of the embodiments of this application, an image processing device is further provided. The device includes a detection unit, an acquisition unit, a positioning unit, a first adjustment unit, a recognition unit, a second adjustment unit, and a display unit. The detection unit is configured to detect a target object in a current video frame of a target video stream, to obtain a current detection region for the target object. The acquisition unit is configured to acquire a determined current detection region based on a historic detection region corresponding to the target object in a historic video frame of the target video stream and the current detection region. The positioning unit is configured to perform key point positioning on the target object based on the determined current detection region, to obtain a first object key point set. The first adjustment unit is configured to perform stabilization on a position of the first object key point set based on a position of a second object key point set corresponding to the target object in the historic video frame, to obtain a position of a current target object key point set in the current video frame. The recognition unit is configured to recognize a part of the target object from the current video frame based on the position of the current target object key point set. The second adjustment unit is configured to perform adjustment on the recognized part of the target object. The display unit is configured to display an image of the target object after the adjustment.

According to another aspect of the embodiments of this application, a storage medium is further provided, which includes a computer program stored therein. The computer program is configured to perform, when being executed, the method for positioning an object key point according to the embodiments of this application.

In the embodiments of this application, a current object detection region for a target object is detected from a current video frame of a target video stream, a determined current detection region is acquired based on a historic detection region corresponding to the target object in a historic video frame and the current detection region, key point positioning is performed on the target object based on the determined current detection region, to obtain a first object key point set, and stabilization is performed on a position of the first object key point set based on a position of a second object key point set corresponding to the target object in the historic video frame of the target video stream, to obtain a position of a current target object key point set in the current video frame, so that object the key point can be stabilized, and a jitter of the object key point between video frames is avoided, thereby improving the accuracy of positioning the object key point, thus solving the technical problem of low accuracy of detecting the object key point in the conventional technology.

**BRIEF DESCRIPTION OF THE DRAWINGS**

The drawings described herein are used for providing further understanding of this application, and form a part of this application. Exemplary embodiments of this application and descriptions thereof are used to explain this application, and do not constitute any inappropriate limitation to this application. In the drawings:

FIG. 1 is a schematic diagram of a hardware environment of a method for positioning an object key point according to an embodiment of this application;

FIG. 2 is a flowchart of a method for positioning an object key point according to an embodiment of this application;

FIG. 3 is a schematic diagram of a process for performing stabilization on a current detection region of a current video frame and performing stabilization on a key point set of a target object in the current video frame according to an embodiment of this application;

FIG. 4 is a flowchart of an image processing method according to an embodiment of this application;

FIG. 5 is a flowchart of a method for positioning a human body key point according to an embodiment of this application;

FIG. 6 is a schematic diagram of a process for multi-box detection according to an embodiment of this application;

FIG. 7 is a schematic diagram showing a change in position of a human body detection box in a video frame image according to an embodiment of this application;

FIG. 8 is a schematic structural diagram of a feature pyramid network according to an embodiment of this application;

FIG. 9 is a schematic diagram showing a distribution of human body key points according to an embodiment of this application;

FIG. 10 is a schematic diagram showing key point positioning according to an embodiment of this application;

FIG. 11 is a schematic diagram of a scenario of detecting a human body detection box of a target human body according to an embodiment of this application;

FIG. 12 is a schematic diagram of a scenario of detecting human body key points of a target human body according to an embodiment of this application;

FIG. 13 is a schematic diagram of an access for a body beautification function according to an embodiment of this application;

FIG. 14 is a schematic diagram showing a comparison between human bodies before and after body slimming according to an embodiment of this application;

FIG. 15 is a schematic diagram of a device for positioning an object key point according to an embodiment of this application;

FIG. 16 is a schematic diagram of an image processing device according to an embodiment of this application; and

FIG. 17 is a structural block diagram of an electronic device according to an embodiment of this application.

**DESCRIPTION OF EMBODIMENTS**

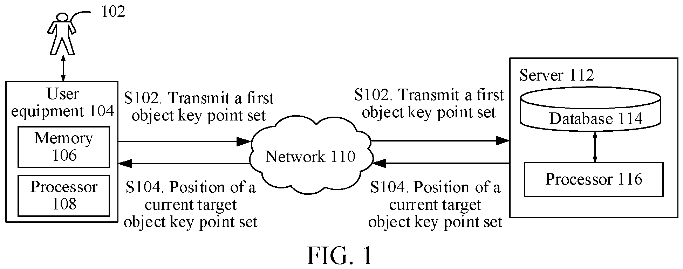

To make those shilled in the art to better under the solutions in this application, the technical solutions in the embodiments of this application are clearly and completely described below with reference to the drawings in the embodiments of this application. Apparently, the described embodiments are merely some rather than all of the embodiments of this application. All other embodiments obtained by those shilled in the art based on the embodiments of this application without creative efforts shall fall within the protection scope of this application.
It is to be noted that, the terms such as "first" and "second" in the specification, the claims and the drawings of this application are intended to distinguish between similar objects, rather than indicating a specific sequence or a chronological order. It is to be understood that the terms used in such a way are interchangeable in proper circumstances, so that the embodiments of this application described herein can be implemented in orders other than the order illustrated or described herein. Moreover, the terms "include", "contain" and any other variants thereof are intended to cover any non-exclusive inclusion. For example, a process, method, system, product, or device that includes a series of steps or units is not necessarily limited to those expressly listed steps or units, but may include other steps or units not expressly listed or inherent to such a process, method, product, or device.
According to an aspect of the embodiments of this application, a method for positioning an object key point is provided. Preferably, the method for positioning an object key point may be applied to, but is not limited to, an environment shown in FIG. 1. FIG. 1 is a schematic diagram of a hardware environment of the method for positioning an object key point according to an embodiment of this application. As shown in FIG. 1, a user 102 may perform data interaction with a user equipment 104. The user equipment 104 may include, but is not limited to, a memory 106 and a processor 108. The user equipment 104 may be configured to: determine a to-be-processed target object in a target video; detect the target object in a current video frame of a target video stream by the processor 108, to obtain a current detection region for the target object; acquire a determined current detection region based on a historic detection region corresponding to the target object in a historic video frame of the target video stream and the current detection region; perform key point positioning on the target object based on the determined current detection region, to obtain a first object key point set; and perform step S102 to transmit the first object key point set to a server 112 through a network 110.
The server 112 includes a database 114 and a processor 116. After the server 112 acquires the first object key point set, the processor 116 acquires, from the database 114, a position of a second object key point set corresponding to the target object in the historic video frame of the target video stream, performs stabilization on a position of the first object key point set based on the position of the second object key point set, to obtain a position of a current target object key point set in the current video frame, and finally performs step S104 to transmit the position of the current target object key point set to the user equipment 104 through the network 110.
It is to be noted that, the foregoing description only shows an example of the hardware environment of the method for positioning an object key point according to the embodiment of this application, and the hardware environment in the embodiment of this application is not limited thereto. For example, the method for positioning an object key point may be performed by a client, which is not described in detail herein.
It is to be noted that, in the conventional technology, for positioning an object key point in a single Photoshop image, it is required to determine each object key point of a human body by a user or a designer through visual observation, which is time-consuming and laborious. In addition, in a video application, an image region in which an object is located is usually stretched as a whole, in a case that a jitter occurs between previous and subsequent video frames in a video, the accuracy of positioning an object key point is low.

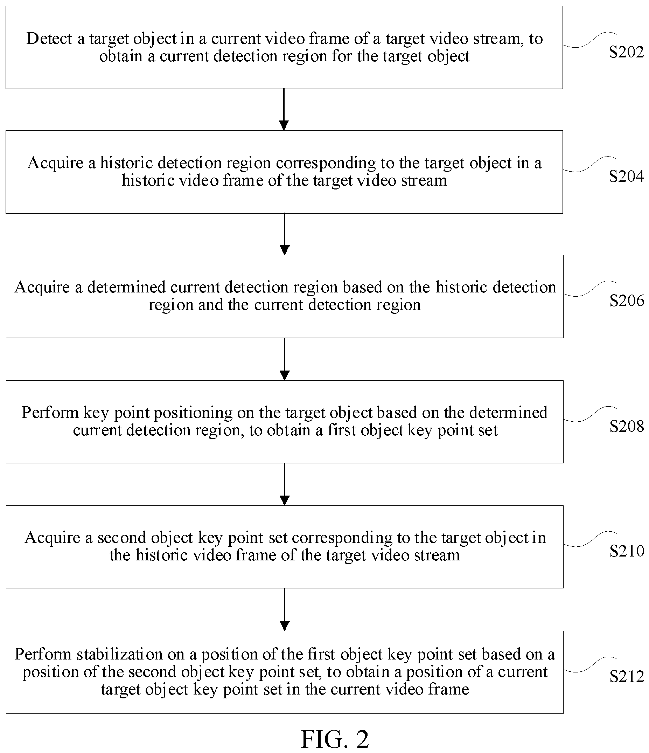

FIG. 2 is a flowchart of a method for positioning an object key point according to an embodiment of this application. As shown in FIG. 2, the method may include the following steps S202 to S212.

In step S202, a target object in a current video frame of a target video stream is detected, to obtain a current detection region for the target object.

The target video stream may be a video stream of any type of video in a video application. For example, the target video stream may be a video stream of a short video. The target object in the current video frame of the target video stream is located in a target scenario displayed by the current video frame. The target object may be an object on which key point positioning is to be performed, such as a human body or an animal. The target scenario may be a video scenario such as a selfie scenario or a dancing scenario. In this embodiment of this application, the video scenario and a type of the target object are not specifically limited.

The current detection region is a region in which the target object is located in the target scenario displayed by the current video frame, and the region includes a position and a range. Specifically, the current detection region may be represented by an object detection box. If the target object is a human body, the object detection box is specifically a human body detection box. More specifically, the object detection box may be represented as a detection box of any shape such as a rectangular box, an elliptic box, or a hexagonal box. These detection boxes are used for marking a position and a range of the target object in the target scenario. Taking a rectangular box as an example, a position shown by the rectangular box may correspond to a coordinate of the upper left corner of the region, and a range shown by the rectangular box may correspond to a length and a width of the region. The region enclosed by the rectangular box is the region in which the target object is located in the target scenario.

Preferably, in this embodiment, the target object is detected by using a detection model that is trained based on a deep neural network. The detection model may be a network model that is trained based on an open-source single shot multibox detector (SSD) architecture. In order to detect the target object by using the detection model, the current video frame may be inputted into the detection model, to form multiple candidate detection boxes and confidences of the multiple candidate detection boxes, from which three candidate detection boxes with maximum confidences are selected, such as a first candidate detection box, a second candidate detection box, and a third candidate detection box. Detection is respectively performed between the first candidate detection box and a historic detection region of a historic video frame adjacent to the current video frame in the target video stream, between the second candidate detection box and the historic detection region, and between the third candidate detection box and the historic detection region, to select, from the first candidate detection box, the second candidate detection box, and the third candidate detection box, a candidate detection box having a maximum intersection-over-union with the historic detection region as the current detection region of the current video frame, thereby ensuring that the same target object is positioned each time.

In step S204, a historic detection region corresponding to the target object in a historic video frame of the target video stream is acquired.

The historic video frame is relative to the current video frame. That is, the historic video frame is a video frame within a preset time period before the current video frame in the target video stream.

The historic detection region may be a stabilized detection region corresponding to the target object in the historic video frame. Position information of the historic detection region, that is, a historic detection result is buffered in a first predetermined position. In a specific implementation, the historic video frame corresponding to the current video frame may represent one or more previous video frames adjacent to the current video frame in the chronological order. The historic detection region corresponding to the historic video frame is a stabilized detection region corresponding to the target object in the historic video frame. The historic detection regions are sequentially stored in sub-positions of the first predetermined position in a sequence of frame numbers of the detected historic video frames. After obtaining the current detection region for the target object, the historic detection region corresponding to the current detection region may be acquired from the first predetermined position.

In step S206, a determined current detection region is acquired based on the historic detection region and the current detection region.

Since an input of a key point detection network is determined based on the current detection region, and the stability of a background in which the target object is located in the region affects the stability of an object key point in a time sequence, a box stabilization mechanism is used to make backgrounds of previous and subsequent frames in the input of the key point detection network partially stable in time and frequency domains. Therefore, in this embodiment, after the current detection region for the target object is obtained, the current detection region needs to be adjusted, for example, stabilization is performed on the current detection region. The current detection region may be adjusted based on the historic detection region, to obtain a determined current detection region. Such adjustment makes a region change value between the determined current detection region and the historic detection region less than a first target threshold. That is, there is no change or a small change between regions indicated by the determined current detection region and the historic detection region in most partial time domains.

The first target threshold is used for indicating a critical value of a region change value. The region change value may be determined based on a change value between a coordinate of the region indicated by the determined current detection region and a coordinate of the region indicated by the historic detection region.

Preferably, after the determined current detection region is acquired based on the historic detection region and the current detection region, a curve that is originally used for indicating a position change of an object detection region is converted to a ladder trajectory, thereby detecting an object key point set of the target object based on the determined current detection region.

In this embodiment, stabilization is performed on the current detection region, so that a region in which the target object is located is partially stable in the time domain between the current video frame and a historic video frame adjacent to the current video frame, thereby providing a stable background for detection of multiple object key points of the target object, thus reducing errors of detecting the object key points caused due to a changed background, and ensuring the accuracy of finally outputting the object key points.

After the determined current detection region is acquired, the determined current detection region may be stored in the first predetermined storage position as a historic detection region corresponding to another subsequent video frame, so that the determined current detection region is used as basic data for performing stabilization on a detection region of the target object in another subsequent video frame.

In step S208, key point positioning is performed on the target object based on the determined current detection region, to obtain a first object key point set.

The first object key point set includes multiple object key points. The multiple object key points are used for identifying feature points of a key part of an object, so as to show a contour of the object.

Different objects correspond to different key points. Therefore, before the solution is implemented, the object key point needs to be defined. For example, if the target object is a human body, the object key point is a human body key point, which may be specifically used for indicating a human body part such as a left ear, a left eye, or a nose. Each human body key point may be located at a position of a part indicated by this human body point. Preferably, in an actual scenario, the motion of an object is complicated, and it is difficult to distinguish "left", "right", "in", and "out". A side of the object first appearing when seeing from left to right may be defined as the left side of the object, and a side of the object first appearing when seeing from right to left may be defined as the right side of the object. Preferably, if the object key point is from a human body, a shoulder first appearing when seeing from left to right is defined as the left shoulder, and a thigh first appearing when seeing from left to right is defined as the left thigh. Multiple object key points are defined, thereby avoiding ambiguity between the multiple object key points.

Preferably, in this embodiment, key point positioning is performed on the target object based on the determined current detection region through a key point detection algorithm, to obtain the first object key point set. Specifically, the key point positioning may be performed on each key point of the target object based on the determined current detection region, to obtain the first object key point set. The first object key point set may be a human body key point set, including 66 human body key points. The key point detection algorithm may be obtained based on a feature pyramid network (FPN) in a deep learning model.

In step S210, a second object key point set corresponding to the target object in the historic video frame of the target video stream is acquired.

In this embodiment, the second object key point set is an object key point set corresponding to the target object in the historic video frame relative to the current video frame. Multiple object key points included in the second object key point set are in a one-to-one correspondence with multiple object key points included in the first object key point set. The second object key point set is obtained by performing key point positioning on the target object in the historic video frame of the target video stream before the current detection region for the target object is obtained, that is, the second object key point set indicates a historic detection result obtained by performing key point positioning on the target object.

In this embodiment, the second object key point set may be a stabilized object key point set corresponding to the target object in the historic video frame adjacent to the current video frame, and is stored in a second predetermined position. The second predetermined position may be the same as the first predetermined position. Stabilized object key point sets corresponding to the target object in historic video frames are sequentially stored in sub-positions of the second predetermined position according to a sequence of frame numbers of the historic video frames.

In step S212, stabilization is performed on a position of the first object key point set based on a position of the second object key point set, to obtain a position of a current target object key point set in the current video frame.

In the technical solution in step S212 in this application, a position of the second target object key point set indicates a detection result for the target object in the historic video frame. The position of the second object key point set may be represented by using a coordinate of the second object key point set on the target object.

In this embodiment, due to a prediction error, a jitter exists between point positions in the target video stream. After the position of the second object key point set is acquired, stabilization is performed on a position of the first object key point set based on the position of the second object key point set, to obtain a position of a current target object key point set in the current video frame. The position of the first target object key point set may be represented by using a coordinate of the first object key point set on the target object, and the position of the current target object key point set may be represented by using a coordinate of the current target object key point set on the target object.

In this embodiment, position change amplitude between the position of the current target object key point set in the current video frame and the position of the second object key point set of the target object in the historic video frame adjacent to the current video frame is less than a second target threshold. The second target threshold is used for indicating a critical value of a position change amplitude between the first object key point set and the second object key point set. That is, an amplitude of a jitter between a key point set of the target object in the current video frame and a key point set of the target object in the historic video frame is reduced.

After stabilization is performed on the position of the first object key point set based on the position of the second object key point set, to obtain the position of the current target object key point set in the current video frame, the current target object key point set may be stored in a second predetermined storage position. The second predetermined storage position may be the same as the first predetermined storage position, to be used for performing stabilization on a position of an object key point set in a video frame which is located after the current video frame. That is, the current target object key point set is used as a basis of performing stabilization on the position of the object key point set in the video frame which is located after the current video frame, and after a current target object key point set is determined, the current target object key point set is stored in the second predetermined storage position. For example, in a case that the current video frame is the third video frame of the target video stream, the current target object key point set is stored in a third sub-position of the second predetermined storage position. The third sub-position of the second predetermined storage position may be adjacent to a second sub-position of the second predetermined storage position, to be used for performing stabilization on a position of an object key point set of a fourth video frame (which is may also be a fifth video frame or a sixth video frame).

In a case that the current video frame turns to be a historic video frame of a video frame after a new current video frame in the target video stream, the current target object key point set also becomes a second object key point set corresponding to the target object in the historic video frame. For example, in a case that the current video frame is a third video frame of the target video stream, the current target object key point set is a second object key point set corresponding to the target object in a historic video frame of the fourth video frame (which may also be the fifth video frame or the sixth video frame) in the target video stream.

In a preferred implementation, step S206 of acquiring a determined current detection region based on the historic detection region and the current detection region includes: acquiring the determined current detection region based on the historic detection region and the current detection region if the historic video frame is a historic video frame adjacent to the current video frame.

In this embodiment, in a case that the determined current detection region is acquired based on the historic detection region and the current detection region, a historic detection region in a historic video frame adjacent to the current video frame may be acquired, and the current detection region is adjusted based on the historic detection region, so that a region change value between a region indicated by the determined current detection region and a region indicated by the historic detection region is less than a predetermined threshold, and there is no change or a small change between regions indicated by the determined current detection region and the historic detection region in most partial time domains.

In a preferred implementation, in a case that the historic video frame is a historic video frame adjacent to the current video frame, the acquiring a determined current detection region based on the historic detection region and the current detection region includes: acquiring an intersection-over-union between the historic detection region and the current detection region in a case that the historic video frame is a historic video frame adjacent to the current video frame; determining the historic detection region as the determined current detection region in a case that the intersection-over-union is greater than a target threshold; and directly determining the current detection region as the determined current detection region in a case that the intersection-over-union is not less than the target threshold.

In this embodiment, after the target object in the current video frame of the target video stream is detected, to obtain the current detection region for the target object, stabilization, that is, box stabilization, is performed on the current detection region. Stabilization may be performed on the current detection region based on a result obtained by detecting the target object in a historic video frame adjacent to the current video frame.

Preferably, for a historic video frame adjacent to the current video frame, a historic detection region for indicating a region in which the target object is located in a target scenario displayed by an image of the historic video frame is acquired, and an intersection-over-union between the current detection region and the historic detection region is acquired. That is, an intersection-over-union between a region A that is indicated by the current detection region and in which the target object is located in a target scenario displayed by an image of the current video frame and a region B that is indicated by the historic detection region and in which the target object is located in the target scenario displayed by the image of the historic video frame is acquired.

Preferably, an intersection-over-union is obtained by calculating a ratio of an area of an intersection between the region A and the region B to an area of a union between the region A and the region B, that is:

$$IOU(A, B) = \frac{Area(A \cap B)}{Area(A \cup B)}$$

After acquiring the intersection-over-union between the current detection region and the historic detection region, whether the intersection-over-union is greater than a target threshold is determined. The target threshold is used for indicating an overlapping degree between the current detection region and the historic detection region, which may be 0.4. In a case that the intersection-over-union between the current detection region and the historic detection region is greater than a second target threshold, it is determined that a region in which the current detection region overlaps with the historic detection region is large, and the historic detection region is determined as a detection region obtained after performing stabilization on the current detection region. That is, a historic detection region of a previous historic video frame of the current video frame is used continually as the detection region obtained after performing stabilization on the current detection region, thereby ensuring that the background is partially stable in the time domain between previous and subsequent video frames, to improve the accuracy in detecting the object key point of the target object.

In a case that the intersection-over-union is not less than the target threshold, the current detection region may be directly used as the determined current detection region, that is, stabilization may not be performed on the current detection region.

Preferably, stabilization may not be performed on a first video frame in the target video stream.

In another preferred example, the current detection region and the historic detection region may be represented by rectangular boxes, and have determined positions in the target scenario. Before acquiring the determined current detection region based on the historic detection region and the current detection region, a first size of the current detection region, a first position of the current detection region in the target scenario, a second size of the historic detection region, and a second position of the historic detection region in the target scenario may be acquired. The first size and the second size may be represented by areas, and the first position and the second position may be represented by coordinates in the target scenario.

After the first size of the current detection region and the second size of the historic detection region are obtained, a size change value between the first size and the second size is acquired, and whether the size change value is less than a first predetermined threshold is determined. The first predetermined threshold is used for indicating a critical value of the size change value between the first size and the second size. After the first position of the current detection region in the target scenario and the second position of the determined current detection region in the target scenario are obtained, a position change value between the first position and the second position is acquired, and whether the position change value is less than a second predetermined threshold is determined. The second predetermined threshold is used for indicating a critical value of the position change value between the first position and the second position. If it is determined that the size change value is less than the first predetermined threshold, and the position change value is less the second predetermined threshold, the historic detection region is determined as the historic detection region, thereby ensuring that there is no change or a small change in sizes and positions of human body detection boxes corresponding to the target object in most partial time domains, to improve the accuracy of detecting the object key points of the target object, thus improving the efficiency of processing the target object.

In a preferred implementation, step S212 of performing stabilization on a position of the first object key point set based on a position of the second object key point set, to obtain a position of a current target object key point set in the current video frame includes: determining the position of the second object key point set as the position of the current target object key point set in a case that the historic video frame is a historic video frame adjacent to the current video frame; or performing, in a case that the historic video frame indicates multiple historic video frames adjacent to the current video frame, stabilization on the position of the first object key point set based on positions of the multiple second object key point sets, to obtain the position of the current target object key point set, where the multiple historic video frames are set in a one-to-one correspondence with the multiple second object key point sets.

In this embodiment, the historic video frame may be adjacent to the current video frame, and the position of the second object key point set corresponding to the target object in the historic video frame indicates a detection result that has been obtained for the object key points in the historic video frame. The position of the second object key point set is directly determined as the position of the current target object key point set. That is, positions of the multiple object key points in the second object key point set are directly determined as positions of multiple object key points in the current target object key point set.

Preferably, the historic video frame may indicate multiple historic video frames adjacent to the current video frame. For example, if the current video frame is a third video frame of the target video stream, the historic video frame indicates the first video frame and the second video frame of the target video stream. Each historic video frame corresponds to one second object key point set. The second object key point set may include all key points on the target object. For example, if the target object is a human body, the second object key point set may include 66 human body key points. Stabilization is performed on the position of the first object key point set based on the positions of the multiple second object key point sets. Specifically, stabilization may be performed on multiple object key points included in the first object key point set based on positions of multiple object key points included in each second object key point set, to obtain the position of the current target object key point set.

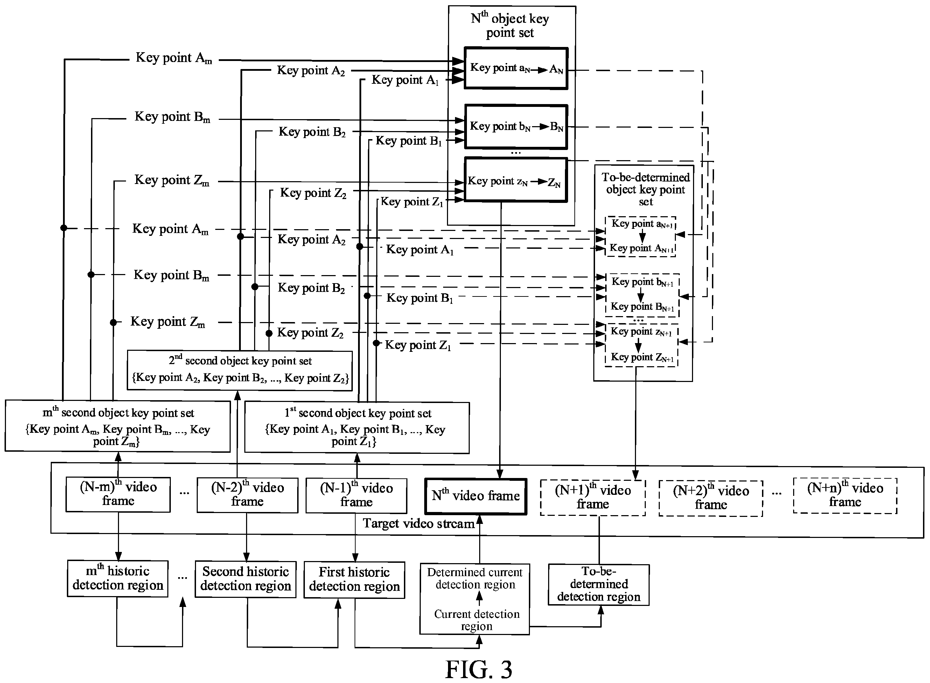

FIG. 3 is a schematic diagram of a process for performing stabilization on a current detection region of a current video frame and performing stabilization on a key point set of a target object in the current video frame according to an embodiment of this application. As shown in FIG. 3, the target video stream includes the $N^{th}$ video frame, the $(N-1)^{th}$ video frame, the $(N-2)^{th}$ video frame, ..., the $(N-m)^{th}$ video frame, the $(N+1)^{th}$ video frame, the $(N+2)^{th}$ video frame, ..., and the $(N+n)^{th}$ video frame. The $N^{th}$ video frame is the current video frame of the target video stream, the $(N-1)^{th}$ video frame, the $(N-2)^{th}$ video frame, ..., and the $(N-m)^{th}$ video frame are multiple historic video frames adjacent to the current video frame in the target video stream, and the $(N+1)^{th}$ video frame, the $(N+2)^{th}$ video frame, ..., and the $(N+n)^{th}$ video frame are multiple video frames located after the current video frame in the target video stream, where N is a natural number greater than or equal to 1, $1 \leq m < N$, m is a natural number, and n is a natural number greater than or equal to 1.

Preferably, in this embodiment, the $(N-1)^{th}$ video frame may be a first historic video frame of the current video frame, and corresponds to a $1^{st}$ second object key point set {key point A1, key point B1, ..., key point Z1} and a first historic detection region. The $(N-2)^{th}$ video frame may be a second historic video frame of the current video frame, and corresponds to a $2^{nd}$ second object key point set {key point A2, key point B2, ..., key point Z2} and a second historic detection region. The $(N-m)^{th}$ video frame may be an $m^{th}$ historic video frame of the current video frame, and corresponds to an $m^{th}$ second object key point set {key point Am, key point Bm, ..., key point Zm} and an $m^{th}$ historic detection region. The $N^{th}$ video frame is the current video frame, and corresponds to the first object key point set {key point an, key point bn, ..., key point zn}. The $1^{st}$ second object key point set, the $2^{nd}$ second object key point set, ..., and the $m^{th}$ second object key point set are stored in a second predetermined position.

In this embodiment, after the target object in the $N^{th}$ video frame of the target video stream is detected, to obtain the current detection region for the target object, a determined current detection region may be acquired based on the first historic detection region and the current detection region, that is, a determined current detection region is obtained by performing stabilization on the current detection region based on the first historic detection region. Preferably, the first historic detection region is determined as the determined current detection region in a case that an intersection-over-union between the first historic detection region and the current detection region is greater than a target threshold; and the current detection region is directly determined as the determined current detection region in a case that the intersection-over-union is not less than the target threshold. In this embodiment, the first historic detection region may be determined based on the second historic detection region, the second historic detection region may be determined based on a historic detection region corresponding to the target object in the $(N-3)^{th}$ video frame, and the rest may be deduced by analogy. Preferably, stabilization is not performed on a detection region in the first video frame of the target video stream.

After the determined current detection region is obtained based on the first historic detection region and the current detection region, the determined current detection region may be stored in a first predetermined position, and the determined current detection region may serve as a historic detection region of a detection region corresponding to the target object in the $(N+1)^{th}$ video frame, to be used for performing stabilization on the detection region corresponding to the target object in the $(N+1)^{th}$ video frame.

Analogy may be performed by using the foregoing method, to perform stabilization on detection regions corresponding to the target object in the $(N+2)^{th}$ video frame and the $(N+3)^{th}$ video frame.

In this embodiment, stabilization may be performed on multiple object key points included in the first object key point set based on positions of multiple object key points included in each second object key point set. For example, stabilization is performed on a position of the key point aN in the first object key point set based on a position of the key point A1 in the $1^{st}$ second object key point set, a position of the key point A2 in the $2^{nd}$ second object key point set, ..., and a position of the key point Am in the $m^{th}$ second object key point set, to obtain a position of the key point AN in the current target object key point set. Stabilization is performed on a position of the key point bN in the first object key point set based on a position of the key point B1 in the $1^{st}$ second object key point set, a position of the key point B2 in the $2^{nd}$ second object key point set, ..., and a position of the key point Bm in the $m^{th}$ second object key point set, to obtain a position of the key point BN in the current target object key point set. Stabilization is performed on a position of the key point zN in the first object key point set based on a position of the key point Z1 in the $1^{st}$ second object key point set, a position of the key point Z2 in the $2^{nd}$ second object key point set, ..., and a position of the key point Zm in the $m^{th}$ second object key point set, to obtain a position of the key point ZN in the current target object key point set. Therefore, stabilization is performed on the multiple object key points included in the first object key point set based on the positions of the multiple object key points included in the each second object key point set, to obtain an $N^{th}$ current target object key point set {key point An, key point Bn, ..., key point Zn}.

Preferably, after the $N^{th}$ current target object key point set {key point An, key point Bn, ..., key point Zn} is obtained, the current target object key point set is stored in a second predetermined storage position, to be used for performing stabilization on a position of an object key point set in a video frame which is located after the current video frame. The second predetermined storage position may be the same as the first predetermined storage position. For example, stabilization is performed on a position of an object key point set of the (N+1)th video frame.

Preferably, stabilization is performed on a position of a key point aN+1 in the object key point set of the (N+1)th video frame based on a position of the key point An in the current target object key point set, the position of the key point A1 in the 1st second object key point set, the position of the key point A2 in the 2nd second object key point set, ..., and the position of the key point Am in the mth second object key point set, to obtain a position of a key point AN+1. Stabilization is performed on a position of a key point bN+1 in the object key point set of the (N+1)th video frame based on a position of the key point Bn in the current target object key point set, the position of the key point B1 in the 1st second object key point set, the position of the key point B2 in the 2nd second object key point set, ..., and the position of the key point Bm in the mth second object key point set, to obtain a position of a key point BN+1. Stabilization is performed on a position of a key point ZN+1 in the object key point set of the (N+1)th video frame based on a position of the key point Zn in the current target object key point set, the position of the key point Z1 in the 1st second object key point set, the position of the key point Z2 in the 2nd second object key point set, ..., and the position of the key point Zm in the mth second object key point set, to obtain a position of a key point ZN+1. Therefore, an (N+1)th current target object key point set {key point AN+1, key point BN+1, ..., key point ZN+1} is obtained based on the Nth current target object key point set {key point AN, key point BN, ..., key point ZN}.

Analogy may be performed by using the foregoing method, to perform stabilization on positions of object key point sets corresponding to the target object in the (N+2)th video frame and the (N+3)th video frame.

In a preferred implementation, the performing stabilization on the position of the first object key point set based on positions of multiple second object key point sets, to obtain the position of the current target object key point set in the current video frame includes: determining a position of a first target object key point that is to be stabilized from the first object key point set; determining a position of a second target object key point that is located corresponding to the first target object key point from each second object key point set, to obtain positions of multiple second target object key points, a part of the target object indicated by the second target object key point is the same as a part of the target object indicated by the first target object key point; acquiring a weighted sum of the positions of the multiple second target object key points; determining a target coefficient based on a frame rate of the target video stream; and performing smoothing on the position of the first target object key point based on the weighted sum and the target coefficient, to obtain a stabilized position of the first target object key point.

The historic video frame in this embodiment may indicate multiple historic video frames adjacent to the current video frame, and stabilization may be performed on a position of each of multiple key points included in the first object key point set based on positions of multiple second object key point sets corresponding to the multiple historic video frames, to obtain the position of the current target object key point set in the current video frame. Preferably, the first object key point set includes multiple object key points, from which a position of a first target object key point that is to be stabilized is determined, and then positions of second target object key points corresponding to the first target object key point are determined from the second object key point sets, to obtain positions of multiple second target object key points. A part of the target object indicated by the second target object key point is the same as a part of the target object indicated by the first target object key point. For example, both the second target object key point and the second target object key point indicate an eye part of a target human body.

In this embodiment, stabilization is performed on the first target object key point based on a detection result of the multiple second target object key points, so that temporal-spatial filtering stabilization may be performed on the first target object key point based on the detection result of the multiple second target object key points. Preferably, a first position of each of the multiple second target object key points on the target object are obtained, to obtain multiple first positions, such as $\{p_{t-i}\}_{i=0:w}$, where t indicates the current video frame, and w indicates a quantity of historic video frames. After the multiple first positions are obtained, a weighted sum of the multiple first positions is obtained. For example, a weighting operation is performed on $\{p_{t-i}\}_{i=0:w}$, to obtain a weighted sum $\sum_{i=0}^{w} p_{t-i}$. A target coefficient is determined based on a frame rate of the target video stream, for example, target coefficients $c_1$ and $c_2$ are determined based on the frame rate of the target video stream. Smoothing is performed on the position of the first target object key point on the target object based on the weighted sum and the target coefficient, to obtain a stabilized position $p_t'$ of the first target object key point. For example, smoothing is performed on the position of the first target object key point on the target object based on the weighted sum $\sum_{i=0}^{w} p_{t-i}$ and the target coefficients $c_1$ and $c_2$, to obtain stabilized position $p_t'$ of the first target object key point:

$$p_t = \frac{1}{\sum_{i=0}^{w} e^{-c_1(p_{t-i}-p_t)^2} \cdot e^{-c_2 i^2}} \sum_{i=0}^{w} p_{t-i} e^{-c_1(p_{t-i}-p_t)^2} \cdot e^{-c_2 i^2}$$

where a factor of time is considered in $e^{-c_2 i^2}$ and $e^{-c_1(p_{t-i}-p_t)^2}$, and w indicates a quantity of historic video frames, that is, a size of a window for temporal-spatial filtering.

A change amplitude between the stabilized position of the first target object key point that is obtained by performing smoothing on the position of the first target object key point on the target object based on the weighted sum and the target coefficient and the position of the second target object key point on the target object in a historic video frame adjacent to the current video frame is less than a second target threshold, such that stabilization on the first target object key points can be achieved.

Preferably, in this embodiment, stabilization may be further performed on object key points other than the first target object key point in the multiple first object key points with the foregoing method, to obtain multiple stabilized object key points, such that it is ensured that the multiple object key points on the target object are stable in a video sequence. Therefore, a prediction error of object key points is eliminated, a strong temporal-spatial consistency is obtained between previous and subsequent video frames, and a jitter is reduced, thereby improving the accuracy of positioning the object key points.

In another preferred implementation, step S202 of detecting a target object in a current video frame of a target video stream, to obtain a current detection region for the target object includes: detecting the current video frame, to obtain multiple first candidate detection regions; and determining a first candidate detection region having a maximum intersection-over-union with the historic detection region in the multiple first candidate detection regions as the current detection region.

In this embodiment, multiple target video frames, multiple detection regions of the target object, and confidences of the multiple detection regions of the target object are used as data for training a first target sub-model. The multiple target video frames are input data of the first target sub-model. The multiple detection regions of the target object and the confidences of the multiple detection regions of the target object are output data of the first target sub-model. Each detection region of the target object may be a region in which the target object is located in a target scenario displayed by an image of each target video frame in a target video. The second target sub-model is trained based on a deep neural network by using the foregoing data, to obtain a first target model. The first target model is used for detecting video frames included in the target video, to obtain multiple detection regions of an object and confidences of the multiple detection regions of the object. The first target sub-model in this embodiment may be a detection model initially constructed based on the deep neural network.

Preferably, the first target model in this embodiment is a network model (MobileNetV1) that is trained based on an open-source SSD architecture, and a quantity of channels of the network model may be reduced to 1/4 of the original quantity according to a requirement on a mobile side, thereby facilitating deployment and acceleration of the model.

In a detection algorithm of an object detection region in this embodiment, the current video frame may be detected through the first target model, to obtain multiple first candidate detection regions and confidences of the multiple first candidate detection regions. The confidences of the first candidate detection regions are used for indicating probabilities that the first candidate detection regions are determined as the current detection region. A first candidate detection region having a maximum intersection-over-union with the historic detection region is selected from the multiple first candidate detection regions, and the first candidate detection region having the maximum intersection-over-union is determined as the current detection region. Preferably, the historic detection region in this embodiment may indicate multiple historic detection regions corresponding to the target object in multiple historic video frames adjacent to the current video frame, and a first candidate detection region that overlaps with at least two of the multiple historic detection regions and that has a maximum intersection-over-union is selected from the multiple first candidate detection regions.

In another preferred implementation, the determining a first candidate detection region having a maximum intersection-over-union with the historic detection region in the multiple first candidate detection regions as the current detection region includes: determining the first candidate detection region having the maximum intersection-over-union with the historic detection region in the multiple first candidate detection regions as the current detection region in a case that the historic video frame is a historic video frame adjacent to the current video frame.

In this embodiment, in order to determine the current detection region, a historic detection region corresponding to the target object in a historic video frame adjacent to the current video frame may be used as a reference object, and a first candidate detection region having a maximum intersection-over-union with the historic detection region in the multiple first candidate detection regions is determined as the current detection region.

For example, a historic detection region A corresponding to the target object in a historic video frame adjacent to the current video frame is used as a reference object. A size of an image in the current video frame is adjusted to 300×300 to be used as an input of the network model, to generate 1000 first candidate detection regions, and a first candidate detection region having a maximum intersection-over-union (IOU) with the historic detection region A is determined as the current detection region of the current video frame. In this way, it can be ensured that the same target object is positioned by human body detection boxes each time.

In a preferred implementation, the determining a first candidate detection region having a maximum intersection-over-union with the historic detection region in the multiple first candidate detection regions as the current detection region includes: selecting a target quantity of target candidate detection regions from the multiple first candidate detection regions, a confidence of each target candidate detection region being greater than or equal to a confidence of any first candidate detection region other than the target quantity of target candidate detection regions in the multiple first candidate detection regions; and determining a first candidate detection region having a maximum intersection-over-union with the historic detection region in the target quantity of target candidate detection regions as the current detection region.

In this embodiment, in order to determine the first candidate detection region having the maximum confidence in the multiple first candidate detection regions as the current detection region, a target quantity of target candidate detection regions are selected from the multiple first candidate detection regions, for example, three target candidate detection regions B0, B1, and B2 are selected. A confidence of each target candidate detection region is greater than or equal to a confidence of any first candidate detection region other than the target quantity of target candidate detection regions in the multiple first candidate detection regions, that is, confidences of the three target candidate detection regions B0, B1, and B2 are maximum confidences in confidences of the multiple current detection regions. Then, a first candidate detection region having a maximum intersection-over-union with the historic detection region in the target quantity of target candidate detection regions is determined as the current detection region. In this way, it can be ensured that the same target object is positioned by human body detection boxes each time.

In a preferred implementation, before step S202 of detecting a target object in a current video frame of a target video stream, to obtain a current detection region for the target object, the method further includes: detecting a historic video frame adjacent to the current video frame, to obtain multiple second candidate detection regions; and determining a second candidate detection region having a maximum confidence in the multiple second candidate detection regions as the historic detection region in a case that the historic video frame adjacent to the current video frame is the first video frame of the target video stream, where a confidence is used for indicating a probability that a corresponding second candidate detection region is determined as the historic detection region.

In this embodiment, before detecting the current detection region corresponding to the target object in the target video stream, a historic video frame adjacent to the current video frame is detected through a first target model, to obtain multiple second candidate detection regions and confidences of the multiple second candidate detection regions. The confidences of the second candidate detection regions are used for indicating probabilities that the second candidate detection regions are determined as the historic detection region. The historic detection region indicates a result obtained by detecting the target object in the historic video frame adjacent to the current video frame. Preferably, in a case that the historic video frame adjacent to the current video frame is the first video frame of the target video stream, a second candidate detection region having a maximum confidence in the multiple second candidate detection regions is directly determined as the historic detection region.

In this embodiment, for the first video frame of the target video stream, a candidate detection region having a maximum confidence in multiple candidate detection boxes determined by a first target model may be determined as a result of an object detection region that needs to be obtained. For a next video frame, a candidate detection region having a maximum intersection-over-union with an object detection region of a previous video frame is determined as an object detection region that needs to be determined, to ensure that the same target object may be positioned by object detection regions each time.

Preferably, in this embodiment, in order to detect a detection region of the target object, the detection region of the target object may be detected with the method for detecting an object detection region at an interval of multiple frames, thereby improving the processing efficiency. Preferably, an object detection region corresponding to a first video frame is obtained with the foregoing method. A second video frame is a video frame located after the first video frame in the target video stream. If the second video frame and the first video frame are spaced by a first quantity of video frames, a condition of performing detection at an interval of multiple frames is met, and the second video frame may be detected by using the first target model, to obtain multiple third candidate detection regions and confidences of the multiple third candidate detection regions. The confidences of the third candidate detection regions are used for indicating probabilities that the third candidate detection regions are determined as a detection region corresponding to the target object in the second video frame.

After the second video frame is detected through the first target model, to obtain the multiple third candidate detection regions and the confidences of the multiple third candidate detection regions, a third candidate detection region having a maximum intersection-over-union with a detection region corresponding to the target object in a previous video frame adjacent to the second video frame in the multiple third candidate detection regions may be determined as an object detection region corresponding to the target object in the second video frame.

In this embodiment, considering the processing performance, not object detection regions of all video frames are obtained through the detection algorithm of an object detection region, and detection may be performed at an interval of a first quantity of video frames through the detection algorithm of an object detection region. A large first quantity indicates a high processing efficiency and a short time. Preferably, in a case that confidences of object key points in the current video frame are generally low, the current video frame is detected by using a human body detection algorithm.

In this embodiment, human body detection boxes are obtained for not all video frames through the human body detection algorithm. A detection result of a second object key point set of a historic video frame adjacent to the current video frame may be used to generate a human body detection box corresponding to the target object in the current video frame.

In this embodiment, the historic detection region is used for indicating a region in which the target object is located in a target scenario displayed by an image of a historic video frame adjacent to the current video frame. The current detection region corresponding to the target object in the current detection region may be generated based on the second object key point set of the target object in the historic detection region. A region that is indicated by the current detection region and in which the target object is located in a target scenario displayed by an image of the current video frame includes a region in which the second object key point set is located. For example, the current detection region includes all object key points in the second object key point set. A side of a smallest rectangular box including the second object key point set may be prolonged by a target ratio, such as 1/5, in a vertical direction, to obtain the current detection region, thereby determining the current detection region corresponding to the target object in the target video.

In another preferred implementation, step S208 of performing key point positioning on the target object based on the determined current detection region, to obtain a first object key point set includes: expanding, in a case that the target object in the current video frame is partially located in the determined current detection region, the determined current detection region by centering on a center of the determined current detection region, to obtain a target object detection box, so as to obtain a target detection region through the expanding, where the expanding may be realized by adaptively increasing a width and a height of the determined current detection region to obtain the target object detection box, so that a region in which the target object in the current video frame is located in the target scenario is completely located in the target object detection box; and acquiring the first object key point set based on a target image including the target object in the target detection region.

In another preferred implementation, the acquiring the first object key point set based on a target image including the target object in the target detection region includes: processing the target image to obtain multiple groups of confidences of the first object key point set, each group of confidences being used for predicting a position of an object key point in the first object key point set; constructing a target matrix with the each group of confidences; determining first target coordinate based on a row and a column of a maximum confidence in the each group of confidences in the target matrix; and determining the position of the object key point in the first object key point set based on the first target coordinate.

In an object key point detection algorithm in this embodiment, multiple images including an object and multiple object key points may be used as data for training a second target model, and the second target model is trained through deep learning by using the training data, to obtain the second target model. The object key point is used for indicating a part of the object, and the second target model may be a model that is established for initial detection.

Preferably, the object key point detection algorithm in this embodiment is based on an FPN in a deep learning model, and a backbone network is a simplified visual geometry group (VGG) network. Preferably, in this embodiment, a convolutional layer is replaced by a residual block, and batch normalization and a parametric rectified linear unit (PReLU) activation function are used after the convolutional layer to improve the accuracy of detecting the object key points.

In this embodiment, the target image in the target object detection box is processed through the second target model, and the target image may be inputted into the FPN, to obtain a heat map of the first object key point set. The heat map corresponds to multiple target matrices, and the target matrices indicate heat map matrices. The target image includes the target object, that is, the target image is a partial image block including a part of the human body. A size of a heat map obtained through the FPN has a proportional relationship with a size of the inputted target image, that is, there is a correspondence between the size of the obtained target matrix and the size of the inputted target image. Multiple groups of confidences of the first object key point set may be obtained through the FPN, and each group of confidences is used for predicting a position of an object key point in the first object key point set. A target matrix is constructed based on each group of confidences, each confidence in the each group of confidences is used for predicting a position of a corresponding object key point on the target object. Preferably, the multiple target matrices are 66 matrices, and are in a one-to-one correspondence with 66 object key points. Preferably, a first confidence having the largest value is selected from the multiple confidences, and a first target coordinate $P_{m1}$ is determined based on a row and a column of the first confidence in the target matrix, and then a position of the object key point in the first object key point set is determined based on the first target coordinate.

In a case that the position of the object key point in the first object key point set is determined based on the first target coordinate, there is a correspondence between the target matrix and the target image inputted to the target matrix network, so that the position of the first object key point on the target image may be calculated based on such correspondence and the first target coordinate determined based on a row and a column of a maximum confidence in the target matrix. Preferably, if the target image is determined based on an initial image, a position and a proportional relationship of the target image in the initial image are also determined, and a position of the first object key point set in the initial image may be calculated.

In another preferred implementation, the determining the position of the object key point in the first object key point set based on the first target coordinate includes: determining a second target coordinate based on a row and a column of a second maximum confidence in each group of confidences in the target matrix; offsetting the first target coordinate toward the second target coordinate by a target distance; and determining, based on first target coordinate that are offset by the target distance, a position of the one object key point corresponding to the target matrix on the target object.

In this embodiment, due to the influence of noises, the energy of a heat map is not normally distributed, and the accuracy of predicting point positions based on the maximum confidence is low. In a case that the position of the object key point in the first object key point set is determined based on the first target coordinate, a second target coordinate $P_{m2}$ corresponding to the target matrix may be determined based on a row and a column of a second confidence in the target matrix. The second confidence is less than the first confidence and greater than a third confidence. The third confidence is a confidence other than the first confidence and the second confidence in multiple confidences. That is, the second confidence is a sub-maximum confidence in the multiple confidences. Further, the first target coordinate is offset toward the second target coordinate by a target distance. For example, the second target coordinate after the offsetting by the target distance are represented as $P = P_{m1} + 0.25 * (P_{m2} - P_{m1})$. Therefore, the position of the object key point corresponding to the target matrix on the target object is determined based on the first target coordinate after the offsetting by the target distance.

In this embodiment, the first object key point set is determined on the target object with the foregoing method. For example, a first object key point set including 66 object key points is obtained.

Preferably, the current object detection region is adjusted based on a first target ratio, and a target image including the target object in a determined current detection region is processed, to obtain the first object key point set.

Preferably, in a case that the target image including the target object in the determined target object detection region is processed to obtain object key points in the first object key point set, the method further includes: adjusting the first target coordinate based on a second target ratio, the second target ratio being a reciprocal of the first target ratio; and determining a position of a point corresponding to the adjusted first target coordinate on the target object as a position of an object key point in the first object key point set on the target object.

In this embodiment, there is a requirement on size of the target image processed through the first target model, for example, a width and a height are required to meet a condition of 192×256, that is, a ratio of 3:4. Because it is difficult to make a target object detection box with a ratio of 3:4, the target object detection box is adjusted based on the first target ratio, for example, the target object detection box is cut based on the ratio of 3:4, facilitating zooming the target object detection box to have a size of 192×256, to be used as an input of the second target model, and the target image including the target object in the determined current detection region is processed by using the second target model, to obtain the first object key point set.

In this embodiment, a first confidence is selected from multiple confidences, and the first target coordinate is determined based on a row and a column of the first confidence in the target matrix, then the first target coordinate is adjusted based on a second target ratio. For example, the first target coordinate is calculated as a coordinate of an original target image based on a cutting position and a zooming ratio of a human body detection box. Further, a point corresponding to the adjusted first target coordinate on the target object in the current video frame is determined as an object key point in the first object key point set.

Preferably, in this embodiment, there is a proportional relationship between a size of a heat map and an input (target image) of a network. A position of an object key point on the target image may be calculated based on the proportional relationship and the size of the heat map. Because the target image is obtained based on a target detection region obtained by the determined current detection region, and the position and the proportional relationship are determined, the position of the object key point in an image of the target detection region may be calculated.

With the foregoing method, each object key point in the first object key point set may be determined, and stabilization is performed on a position of the each object key point in the first object key point set through a key point stabilization algorithm.

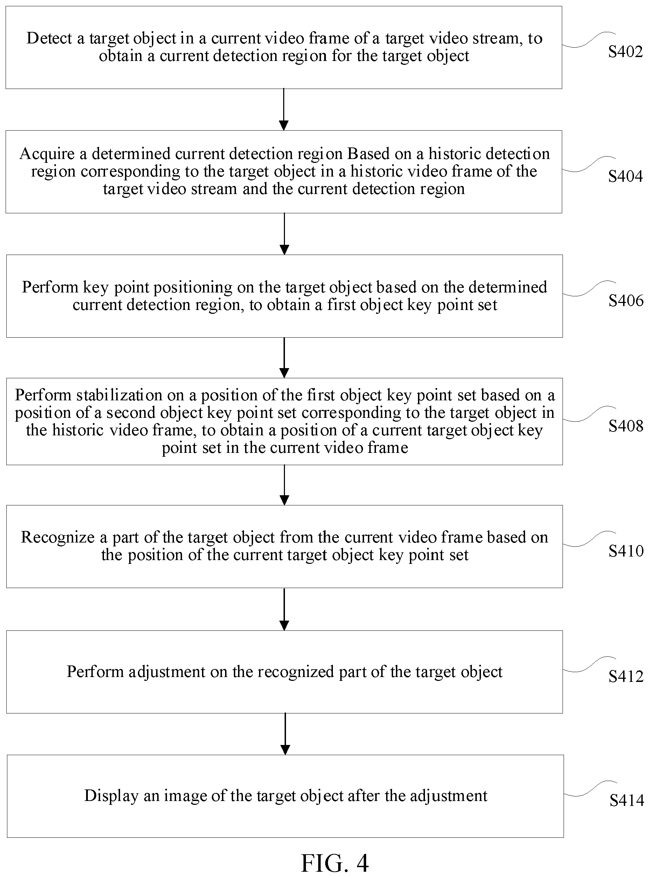

FIG. 4 is a flowchart of an image processing method according to an embodiment of this application. As shown in FIG. 4, the method includes the following steps S402 to S 414.

In step S402, a target object in a current video frame of a target video stream is detected, to obtain a current detection region for the target object.

It is to be noted that, the technical solution of step S402 may include the technical solution of step S202.

In step S404, a determined current detection region is acquired based on a historic detection region corresponding to the target object in a historic video frame of the target video stream and the current detection region.

It is to be noted that, the technical solution of step S404 may include the technical solutions of step S204 and step S206.

In step S406, key point positioning is performed on the target object based on the determined current detection region, to obtain a first object key point set.

It is to be noted that, the technical solution provided in step S406 may include the technical solution provided in step S208.

In step S408, stabilization is performed on a position of the first object key point set based on a position of a second object key point set corresponding to the target object in the historic video frame, to obtain a position of a current target object key point set in the current video frame.

It is to be noted that, the technical solution of step S408 may include the technical solutions of step S210 and step S212.

In step S410, a part of the target object is recognized from the current video frame based on the position of the current target object key point set.

In the technical solution of step S410 in this application, the current target object key point set is obtained after performing stabilization on the first object key point set, and amplitude of the jitter between the current target object key point set and a key point set of the target object in the historic video frame is small, thereby eliminating a prediction error of key points. In addition, each key point in the current target object key point set may be used for indicating a part of the target object. For example, if the target object is a human body, there are 66 key points in the current target object key point set, which are used for indicating 66 different parts on the human body, which shows a contour of an object. Based on this, parts of the target object are accurately recognized from the current video frame based on the position of the current target object key point set. For example, parts such as ears, a mouth, a nose, and eyes of a human body are recognized. A jitter amplitude between a region in which a part of the target object is located and that is recognized from the current video frame and a region in which the part of the target object is located and that is recognized from the historic video frame is small.

In step S412, adjustment is performed on the recognized part of the target object.

After the part of the target object is recognized from the current video frame, an image of the recognized part of the target object is displayed, and an adjustment instruction used for performing adjustment on the part is received. Preferably, a user determines, based on the displayed image of the part of the target object, a part that needs to be adjusted, triggers the adjustment instruction by performing an operation on the part that needs to be adjusted, to perform real-time adjustment on the part of the target object in response to the adjustment instruction. For example, the user triggers a waist slimming instruction by adjusting a slider of a "waist slimming" function, and adjusts a waist slimming degree in real time in response to the waist slimming instruction. This embodiment is also applicable to realize part adjustment such as leg elongating and hip lifting, which is not limited herein.

In step S414, an image of the target object is displayed after the adjustment.

In the technical solution of step S414 in this application, the image of the adjusted target object may present an adjusting effect to the part of the target object. In a case that the adjusting effect to the part of the target object does not meet a predetermined effect, adjustment may be continually performed on the recognized part of the target object. Because adjustment is performed on the part of the target object based on the stabilized first object key point set in this embodiment, an adjusting effect to the target object is natural, thereby realizing refined processing on the target object in real time, and avoiding the problem of a poor processing effect to the target object that is caused by a jitter between previous and subsequent video frames in the target video stream. Therefore, the processing effect to the target object is realistic and natural, and a difference between the processing effect to the target object and a natural beautification effect that is accepted by the user is reduced.

In this embodiment, a detection algorithm of an object detection region and a detection algorithm of an object key point are based on a deep neural network method, and a stabilization algorithm may be based on a temporal-spatial filtering algorithm. The three algorithms are the core of real-time tracking of object key points, which affects the accuracy of the finally outputted object key points and the stability between the previous and subsequent video frames. With the deep neural network method, there is a quite good convergence and generalization performance on domain data, such that both the human body detection box and the point positioning can be performed with a good precision. Stabilization is performed on the current detection region to provide a stable background for detection of object key points, such that an error caused by a changed background can be reduced. Stabilization is performed on the position of the first object key point set, to eliminate a prediction error of points, such that a strong temporal-spatial consistency can be realized between the previous and subsequent video frame images, and a jitter can be reduced, thereby improving the accuracy in detecting the object key points. Further, a part of the target object is adjusted based on the stabilized object key points, so that an adjusting effect to an object is natural, thereby avoiding a poor processing effect to the target object that is caused by a jitter between previous and subsequent video frames in a video, thus improving the efficiency of processing the target object.

It is to be noted that, in the solutions according to this application, any target object of which key point needs to be positioned may be detected to improve the positioning accuracy. For example, the target object may be a target object having a motion ability. The target object may be a living body such as a human body or an animal (such as a dog or a cat). A process of detecting any type of target object is basically the same. For convenience of description, the following description is made by taking an example in which the target object is a human body.

The technical solutions in this application are described in another embodiment. Descriptions may be made by taking an example in which the target object is a human body and the detection region is a human body detection box, and a human body detection algorithm and a stabilization tracking algorithm thereof, and a detection algorithm of 66 human body key points and a stabilization tracking algorithm thereof are used.

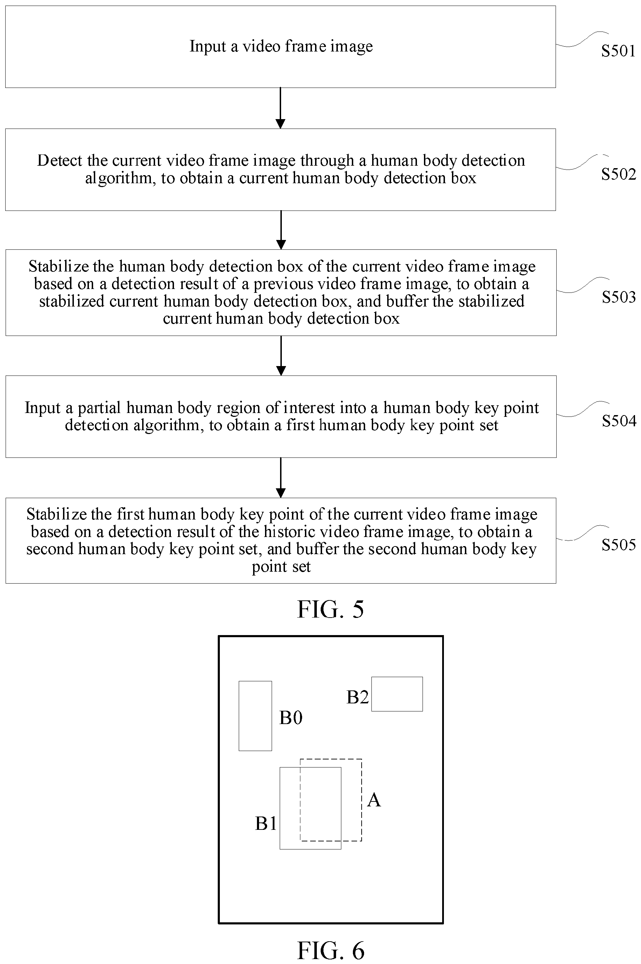

FIG. 5 is a flowchart of a method for positioning a human body key point according to an embodiment of this application. As shown in FIG. 5, the method includes the following steps S501 to S505.

In step S501, a video frame image is inputted.

A video in this embodiment may be a short video. The short video uses a figure as the theme, and includes multiple video frame images. A video frame image is inputted, the video frame image includes an image of a human body, and the image of the human body is positioned and tracked in the current video frame image.

In step S502, the current video frame image is detected through a human body detection algorithm, to obtain a current human body detection box.

The human body detection algorithm performs detection based on a human body detection model that is trained by a deep neural network of a high performance. With the deep neural network, human body detection model achieves a good convergence and generalization performance on domain data. In this way, detection of the human body detection box can be performed with a good precision. In a specific implementation, the human body detection model may be a MobileNetV1 network model trained based on a SSD architecture. In a specific implementation, a quantity of channels of the network model may be reduced to 1/4 of the original quantity according to a requirement on a mobile side, thereby facilitating deployment and acceleration of the model.

To ensure a processing effect of the model, in a specific image processing process, a size of the current video frame image is adjusted to $300\times300$ to be used as an input of the human body detection model. The human body detection model may output 1000 candidate human body detection boxes. The human body detection model may further output confidences of the candidate human body detection boxes, and the confidence is used for indicating a probability that a candidate human body detection box is selected as a human body detection box.

Considering that most short video scenarios use a figure as the theme, the short video scenario in the following is explained by using an example of detection and tracking of a figure. In a case that the current video frame image is the first video frame image of the video, a human body detection box having a maximum confidence in the 1000 candidate human body detection boxes of the current video frame image is determined as a box in which the human body is located, to obtain a current human body detection box A.

In a case that the current video frame image is not the first video frame image of the video, multi-box detection needs to be performed. Three candidate human body detection boxes B0, B1, and B2 having maximum confidences and a human body detection box A of a previous video frame image of the current video frame image need to be selected for detection from the 1000 candidate human body detection boxes that are outputted by the human body detection model based on the current video frame image, to determine a current human body detection box corresponding to the current video frame image.

A detection process is explained below with reference to FIG. 6, which is a schematic diagram of multi-box detection according to an embodiment of this application. The human body detection boxes B0, B1, and B2 are detected based on the human body detection box A. Intersections-over-union (IOUs) between the human body detection box A and the human body detection box B0, between the human body detection box A and the human body detection box B1, and between the human body detection box A and the human body detection box B2 are calculated according to

$$IOU(A, B) = \frac{Area(A\cap B)}{Area(A\cup B)}$$, that is, the intersection-over-union is represented as a ratio of a first area of an intersection between A and B to a second area of a union between A and B, where B respectively indicates B0, B1, and B2 in the calculation process.

The human body detection box B1 having the maximum IOU with the human body detection box A is selected from the human body detection boxes B0, B1, and B2 as the current human body detection box of the current video frame image, thereby ensuring that the same person is positioned by the human body detection boxes each time.

Preferably, to improve the positioning efficiency, a part of video frame images may be detected with the human body detection algorithm, and for another part of video frame images, a human body detection box may be calculated based on positions of human body key points of a previous video frame as the current human body detection box of the current video frame image. Compared with a manner in which all video frame images are detected with the human body detection algorithm, with the manner in this embodiment, computing resources can be saved and the positioning efficiency can be improved. Specifically, which video frames are detected with the human body detection algorithm and which video frames are positioned based on previous video frame images corresponding to the video frames may be flexibly determined in actual applications. For example, a manner of performing detection at an interval of multiple frames may be used. For example, detection is performed with the human body detection algorithm at an interval of four frames. For example, a first video frame is detected with the human body detection algorithm, the human body detection box of each of a second video frame to a fifth video frame is determined based on a human body key point detected in a previous video frame of the video frame, and a sixth video frame is detected with the human body detection algorithm. The rest may be deduced by analogy. Intervallic detection is performed in the above two aspects with the detection manner, such that the operating efficiency can be improved. It is to be noted that, a large quantity of video frame images between the spaced video frames indicates a high efficiency. In addition, when detection is performed with the human body detection algorithm may be determined by detecting confidences of human body key points. For example, only when it is detected that confidences of human body key points of the current video frame image are generally low, the current video frame image is detected with the human body detection algorithm.

In step S503, the human body detection box of the current video frame image is stabilized based on a detection result of a previous video frame image, to obtain a stabilized current human body detection box, and the stabilized current human body detection box is buffered.

A region of the current human body detection box determines an input of the human body key point detection algorithm, and the stability of a background in which the human body is located in the region also affects the stability of the human body key points in a video time sequence. Therefore, in this embodiment, a stabilization tracking algorithm for human body detection is used. The human body detection box of the current video frame image is stabilized based on a detection result of a previous video frame image, to obtain a stabilized current human body detection box, and the stabilized current human body detection box is buffered, to provide a stable background for detection of the human body key points of the current video frame image, so that background inputted to the human body key point model is partially stabilized in the time domain between previous and subsequent video frame images, reducing an error caused by a changed background. The stabilization tracking algorithm for human body detection, that is, a box stabilization algorithm, is used for performing stabilization on the human body detection box.

Preferably, in a case that the human body detection box of the current video frame image is stabilized based on the detection result of the previous video frame image, if an IOU between the current human body detection box of the current video frame image and a human body detection box of the previous video frame image is greater than a target threshold, the human body detection box of the previous video frame image is continually used as the human body detection box of the current video frame image. The target threshold may be 0.4. That is, in this embodiment, a box in which a human body is located may be calculated based on positions of human body key points of the previous video frame image as the current human body detection box of the current video frame image, or a box stabilization may be performed on the current human body detection box of the current video frame image based on the human body detection box of the previous video frame image. If the current video frame image is the first video frame image of the video, it is unnecessary to perform box stabilization on the current human body detection box of the current video frame image.

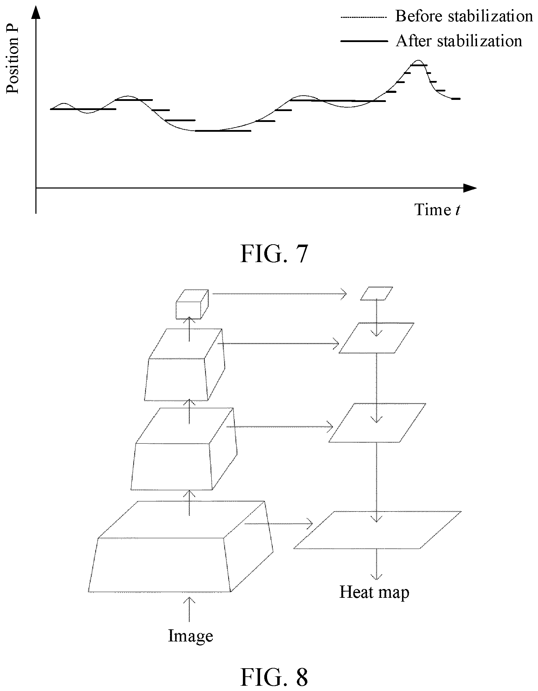

FIG. 7 is a schematic diagram showing a change in position of a human body detection box in a video frame image according to an embodiment of this application. As shown in FIG. 7, a position p (x or y component) of the human body detection box is converted from an original curve trajectory to a ladder trajectory, so that a size and the position of the human body detection box are unchanged in most partial time domains, and background inputted to the human body key point model is partially stable in the time domain between previous and subsequent video frame images.

In step S504, a partial human body region of interest is inputted into a human body key point detection algorithm, to obtain a first human body key point set.

The human body key point detection algorithm in this embodiment is based on a deep neural network, so that it has a good convergence and generalization performance on domain data, and the point positioning is performed with a good precision, and calculation may be performed with a temporal-spatial filtering algorithm.

Preferably, the human body key point detection algorithm in this embodiment may be based on an FPN in a deep learning model. The FPN is mainly used to solve a multi-scale problem in object detection. Through a simple change in network connection, the performance of small object detection is greatly improved without increasing a calculation amount of an original model.

FIG. 8 is a schematic structural diagram of a feature pyramid network according to an embodiment of this application. As shown in FIG. 8, a video frame image is inputted, to obtain a key point heat map, and a backbone network is a simplified VGG network. Preferably, in this embodiment, a convolutional layer is replaced by a residual block, and batch normalization and a PReLU activation function are used after the convolutional layer to improve the accuracy in detecting the key points.

It is to be noted that the human body key point detection algorithm in this embodiment is designed based on an FPN structure and is only an example of this embodiment of this application. The human body key point detection algorithm in this embodiment is not limited to being designed based on the FPN structure, which may also be designed based on an HourGlass structure. The backbone network may be a small network such as a VGG network, MobileNetV1, MobileNetV2, ShuffleNetV1, or ShuffleNetV2 or a variant thereof, which is not limited herein.

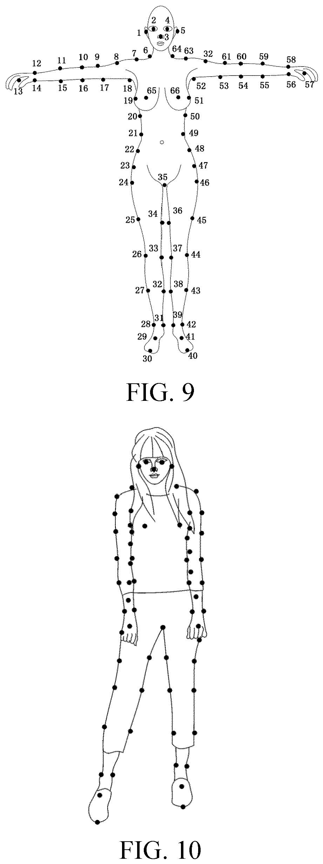

FIG. 9 is a schematic diagram showing a distribution of human body key points according to an embodiment of this application. As shown in FIG. 9, human body key points 1 to 66 are shown, to indicate a position of a part of a human body on the human body. As shown in Table 1, Table 1 is a human body key point definition table, in which the human body key points are defined. Left and right are determined based on orientations on an image.

Table 1 human body key point definition table

| Number | Descriptions |
|---|---|
| 1 | Left ear |
| 2 | Left eye |
| 3 | Nose |
| 4 | Right eye |
| 5 | Right ear |
| 6/64 | Left/Right neck |
| 7/63 | Left/Right shoulder |
| 8/62 | 1/3 of trisection of the contour from 7 to 10/1/3 of trisection of the contour from 63 to 60 |
| 9/61 | 2/3 of trisection of the contour from 7 to 10/2/3 of trisection of the contour from 63 to 60 |
| 10/60 | External point of left/right elbow joint |
| 11/59 | Midpoint of the contour from 10 to 11/midpoint of the contour from 60 to 59 |
| 12/58 | External point of left/right wrist joint |
| 13/57 | Center of left/right hand |
| 14/56 | Internal point of left/right wrist joint |
| 15/55 | Midpoint of the contour from 14 to 16/midpoint of the contour from 56 to 54 |
| 16/54 | Internal point of left/right elbow joint |
| 17/53 | Midpoint of the contour from 16 to 18/midpoint of the contour from 54 to 52 |
| 18/52 | Left/Right armpit |
| 19/51 | 1/6 of hexasection of the left contour of the body from 18 to 24/1/6 of hexasection of the right contour of the body from 52 to 46 |
| 20/50 | 2/6 of hexasection of the left contour of the body from 18 to 24/2/6 of hexasection of the right contour of the body from 52 to 46 |
| 21/49 | 3/6 of hexasection of the left contour of the body from 18 to 24/3/6 of hexasection of the right contour of the body from 52 to 46 |
| 22/48 | 4/6 of hexasection of the left contour of the body from 18 to 24/4/6 of hexasection of the right contour of the body from 52 to 46 |
| 23/47 | 5/6 of hexasection of the left contour of the body from 18 to 24/5/6 of hexasection of the right contour of the body from 52 to 46 |
| 24/46 | Lateral point of left/right thigh |
| 25/45 | Midpoint of the contour from 24 to 26/midpoint of the contour from 46 to 44 |
| 26/44 | Lateral point of left/right knee joint |
| 27/43 | Midpoint of the contour from 26 to 28/midpoint of the contour from 44 to 42 |
| 28/42 | Lateral point of left/right ankle |

(continued)

| Number | Descriptions |
|---|---|
| 29/41 | Left/Right instep |
| 30/40 | Left/Right tiptoe |
| 31/39 | Medial point of left/right ankle |
| 32/38 | Midpoint of the contour from 31 to 33/midpoint of the contour from 39 to 37 |
| 33/37 | Medial point of left/right knee joint |
| 34/36 | Midpoint of the contour from 33 to 35/midpoint of the contour from 37 to 35 |
| 35 | Medial point of thigh |
| 65/66 | Midpoint of left/right chest |

The human body key point network model in this embodiment is trained based on a large quantity of data that is strictly annotated. If ambiguity occurs in the annotation, a failure in training the model is caused. Positions of human body key points are clearly defined based on the human body model in FIG. 9. However, in actual scenarios, the motion of the human body is extremely complicated, it is difficult to distinguish "leftward", "rightward", "inward", and "outward" as shown in Table 1. Therefore, in this embodiment, a standard needs to be defined. For example, a side first appearing on the body when seeing from left to right is defined as the left side of the body, a shoulder first appearing when seeing from left to right is defined as the left shoulder, and a thigh first appearing when seeing from left to right is defined as the left thigh. "Inside" and "outside" are defined relative to a center line of the body. Ambiguity does not occur in data annotation according to this standard.

After the human body detection box of the current video frame image is stabilized based on the detection result of the previous video frame image, to obtain the stabilized human body detection box, the region of interest is inputted into the human body key point detection algorithm, to obtain the first human body key point set.

Preferably, due to the accuracy of the algorithm, the human body detection box positioned based on the stabilization mechanism may can not enclose the human body. To ensure that the human body is entirely enclosed, a rectangular region in which the human body is located needs to be expanded properly in this embodiment. The center of the human body detection box may be kept unchanged, and a width and a height of the human body detection box are adaptively increased, that is, the human body detection box is enlarged by centering on the original center.

Preferably, in this embodiment, there is a proportional relationship between a size of a heat map and an input image of a network. A position of a human body key point on the target image may be calculated based on the proportional relationship and the size of the heat map. Because the target image is obtained from an original image, and a position of the original image and the proportional relationship are determined, the position of the human body key point in the original image may be calculated.

Preferably, the human body key point detection algorithm in this embodiment requires an input with a width of 192 and a height of 256, that is, a ratio of the width to the height is 3:4. Because it is difficult to maintain the expanded historic detection region to have a ratio of 3:4, the expanded historic detection region needs to be processed to have the ratio of 3:4, thereby facilitating zooming the expanded historic detection region to have a size of 192×256, to be used as an input of the human body key point detection algorithm. A region included in the expanded historic detection region may be a region of interest, which indicates a result obtained by performing secondary processing on the historic detection region. After being processed to have the ratio of 3:4, the expanded historic detection region is inputted into the FPN, to obtain heat maps of the 66 human body key points through prediction, that is, 66 matrices. The 66 human body key points are in one-to-one correspondence with the 66 matrices, and each matrix is used for indicating a confidence of a position of an element in the matrix. Preferably, in this embodiment, an image included in the original historic detection region may be determined based on a position (a row and a column) of the maximum confidence of the heat map matrix, and a coordinate, that is, a point position, of a key point on the human body in the image included in the original historic detection region is calculated.

However, due to the influence of noises, the energy of a heat map is not normally distributed, and predicting a position of a point based on the maximum confidence is inaccurate. Therefore, in this embodiment, prediction is performed on each heat map by offsetting a maximum point position $P_{m1}$ toward a second maximum point position $P_{m2}$ by a distance of 1/4, that is:

$$P = P_{m1} + 0.25 * (P_{m2} - P_{m1})$$

Therefore, partial coordinates of the 66 key points are obtained. Then, coordinates of the 66 key points in the original image are calculated based on a cutting position and a zooming ratio of 3:4 of the human body detection box, to determine the coordinates of the 66 key points on the human body.

In step S505, the first human body key point set of the current video frame image is stabilized based on a detection result of the historic video frame image, to obtain a second human body key point set, and the second human body key point set is buffered.

A stabilization tracking algorithm for human body key point detection in this embodiment, that is, a point stabilization algorithm, is used for performing a point stabilization operation on the human body key points of the human body. After a partial human body region of interest is inputted into the human body key point detection algorithm, to obtain the first human body key point set, the first human body key point set of the current video frame image is stabilized through the stabilization tracking algorithm of human body key point detection based on a detection result of the historic video frame image, to obtain a second human body key point set, and the second human body key point set is buffered and outputted.

In this embodiment, human body key points of each frame may be calculated based on the human body key point detection algorithm. However, due to a prediction error, it seems that a jitter of point positions exists in the video. To reduce the jitter of point positions between video frames, a time domain point stabilization algorithm is needed. Assuming that a position of a key point in the $t^{th}$ frame is $p_t$ (a x component or a y component), weighting may be performed based on a position $\{p_{t-i}\}_{i=0:w}$ of a point corresponding to $p_t$ in the historic video frame image adjacent to the current video frame, to perform temporal-spatial filtering on $p_t$ to perform recalculation, that is:

$$p_t = \frac{1}{\sum_{i=0}^{w} e^{-c_1(p_{t-i}-p_t)^2} \cdot e^{-c_2 i^2}} \sum_{i=0}^{w} p_{t-i} e^{-c_1(p_{t-i}-p_t)^2} \cdot e^{-c_2 i^2}$$

where the historic video frame image indicates video frame images previously adjacent to the current video frame, and w is used for indicating a quantity of historic video frame images, that is, a size of a window of a temporal-spatial filtering algorithm. Suitable values are selected for $c_1$ and $c_2$ based on the frame rate, and smoothing is performed on the 66 key points, thereby ensuring that the point positions are stable in a video sequence.

In this embodiment, a prediction error of key points may be eliminated, such that a strong temporal-spatial consistency between the previous and subsequent video frame images is realized, and a jitter is reduced, thereby ensuring the accuracy and the stability of the human body key points between the previous and subsequent video frame images.

In this embodiment, a video frame image is inputted into a human body detection algorithm to detect a human body detection box, to obtain a current human body detection region, box stabilization is performed on the current human body detection region of the current video frame image through a stabilization tracking algorithm of human body detection based on a detection result of a previous video frame image, to obtain a historic detection region, The stabilized historic detection region is expanded to select a human body region of interest, and the expanded historic detection region is inputted into a human body key point detection algorithm, to obtain a first human body key point set. Stabilization is also performed on the current first human body key point set based on a stabilization tracking algorithm for human body key point detection based on a detection result of a historic video frame, to obtain a second human body key point set. Adjustment is performed on a part of the human body based on the second human body key point set, to meet a requirement of human body beautification, thereby achieving a refined beautification effect which is close to a natural beautification effect that is accepted by a user.

In this embodiment, the human body detection algorithm and the human body key point detection algorithm are based on a deep neural network method, and a stabilization algorithm may be based on a temporal-spatial filtering algorithm. The three algorithms are the core of real-time tracking of human body key points, and determine the accuracy of the finally outputted human body key points and the stability between the previous and subsequent video frames. With the deep neural network method, there is a good convergence and generalization performance on domain data. Therefore, both the human body detection box and the point positioning can be performed with a good precision. A box stabilization algorithm is used to provide a stable background for human body key point detection, to reduce an error caused by a changed background. With s point stabilization algorithm, a prediction error of points may be eliminated, realizing a strong temporal-spatial consistency between the previous and subsequent video frame images, thus reducing a jitter.

With the solution in this embodiment, real-time positioning of human body key points containing the contour of a human body may be performed on a mobile side. First, a human body is positioned and tracked in the video, and partial detection and stabilization tracking are performed on the partial key points. A human body detection model and a key point detection model are 3M in total, which may support 30fps real-time body beautification on the mobile side, and has a more natural effect.

This embodiment may be applied to a short video App, a mobile phone camera function, image processing software and the like, which may implement face slimming, lipstick applying, skin buffing and the like in a scenario such as selfie or dancing, may also implement breast enlargement, waist slimming, leg elongating, leg slimming and the like, and may also implement real-time special effects of waist slimming, leg elongating, and hip lifting. This embodiment can adapt to complicated actions of front, side, back, squat, and limbs postures, to meet human body beautification requirements in various scenarios.

FIG. 10 is a schematic diagram of key point positioning according to an embodiment of this application. As shown in FIG. 10, this embodiment shows a real-time key point tracking method on a mobile side, which contains the contour of a human body. The current video frame image includes a human body, and the human body includes 66 key points used for indicating positions of parts on the human body, as shown in Table 1. Stabilization is performed on the 66 key points of the human body. Specifically, the stabilization is performed on the 66 key points in the current video frame image based on a detection result of a historic video frame image, to obtain 66 stabilized key points.

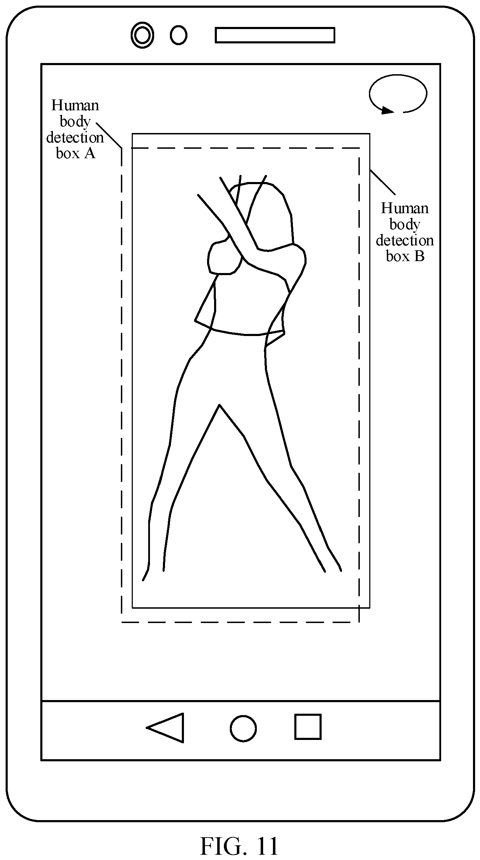

FIG. 11 is a schematic diagram of a scenario for detecting a human body detection box of a target human body according to an embodiment of this application. As shown in FIG. 11, a dancing video of a target human body is shot by a mobile terminal. The target human body in the video is detected, to determine a human body detection box of the target human body, and the human body detection box may enclose the contour of the target human body. A human body detection box A is used for indicating a position and a range of a region in which the target human body is located in a target scenario displayed by an image of the current video frame of the dancing video, and a human body detection box B is used for indicating a position and a range of a region in which the target human body is located in a target scenario displayed by an image of a historic video frame adjacent to the current video frame. An intersection-over-union is obtained by calculating a ratio of an area of intersection between the human body detection box A and the human body detection box B to an area of union between the human body detection box A and the human body detection box B, that is:

$$IOU(A, B) = \frac{Area(A \cap B)}{Area(A \cup B)}$$

In a case that the intersection-over-union between the human body detection box A and the human body detection box B is greater than a target threshold, the human body detection box B is directly determined as the human body detection box of the current video frame, so that a size and a position of the human body detection box are unchanged in most partial time domains, thereby performing stabilization on the human body detection box of the current video frame.

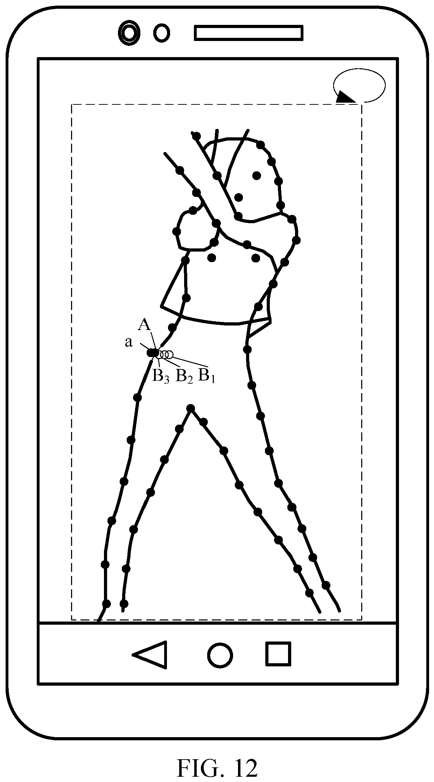

FIG. 12 is a schematic diagram of a scenario for detecting human body key points of a target human body according to an embodiment of this application. As shown in FIG. 12, after determining the human body detection box B shown in FIG. 11 as the human body detection box of the current video frame, an image included in the human body detection box B is inputted into a key point detection algorithm, to obtain multiple human body key points. Preferably, a human body key point is selected from the multiple human body key points, and stabilization is performed on a position a of a target human body key point corresponding to the current video frame through a stabilization algorithm based on a position B1, a position B2, and a position B3 of target human body key points of historic video frame. A weighted sum may be calculated on the position B1, the position B2, and the position B3, and smoothing is performed on the position a by temporal-spatial filtering, to obtain a position A of the target key point on the target human body. The position A is a position obtained after performing stabilization on the target human body key point at the position a on the target human body, to reduce a jitter of point positions between video frames.

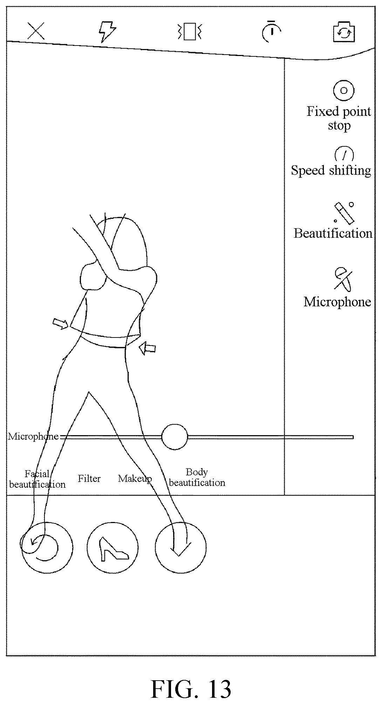

FIG. 13 is a schematic diagram of access to a body beautification function according to an embodiment of this application. As shown in FIG. 13, on a terminal, the body beautification function is accessed, and a human body in a video frame is detected. After the stabilization is performed on 66 key points in a current video frame image, a prediction error of points is eliminated, such that a strong temporal-spatial consistency is realized between previous and subsequent video frame images. Then a part of the human body is adjusted based on the stabilized key points. For example, a "waist slimming" function is selected, and a waist slimming degree is adjusted in real time by adjusting a slider of the "waist slimming" function, thereby slimming the waist of the human body, to achieve a refined beautification effect which is close to a natural beautification effect that is accepted by a user.

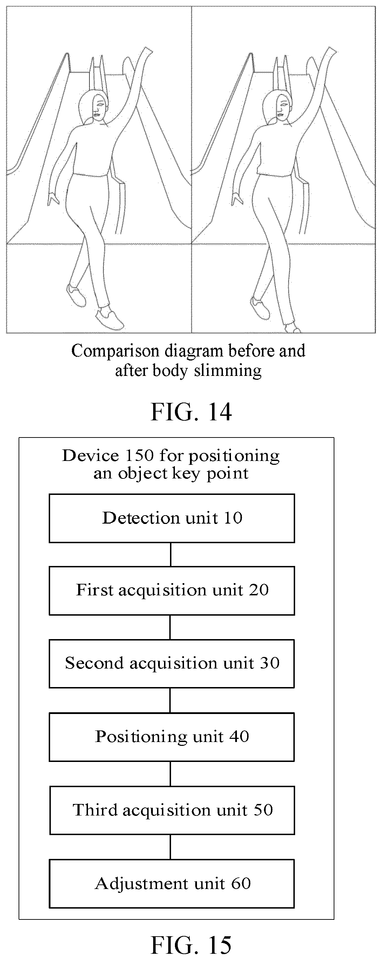

FIG. 14 is a schematic diagram showing a comparison between human bodies obtained before and after body slimming according to an embodiment of this application. As shown in FIG. 14, on a terminal, the body beautification function is accessed, and a human body in a video frame is detected. After the stabilization is performed on 66 key points in a current video frame image, all parts of the human body are adjusted based on the stabilized key points. For example, an entire body slimming function is selected, thereby slimming the human body, to achieve a refined beautification effect, which is close to a natural beautification effect that is accepted by a user.

In this embodiment, a body beautification function such as body slimming or leg elongating may be implemented additionally, and a body pendant can be further added, thereby avoiding a disadvantage that manual intervention is needed for a single PS image, which is time-consuming and laborious and limits application scenarios. In addition, with this embodiment, it can also avoid a disadvantage that an unrealistic effect of simply stretching the human body. Therefore, the efficiency of processing an object in a video is improved, and user experience is improved.

It is to be noted that the stabilization may be performed on all human body key points with the foregoing method, to perform smoothing on the multiple human body key points, ensuring that positions of the point are stable in a video sequence.

In another preferred example, in this embodiment, the body beautification function is accessed, and a human body in a video frame is detected. After the stabilization is performed on 66 key points in a current video frame image, a prediction error of points is eliminated, such that a strong temporal-spatial consistency is realized between previous and subsequent video frame images. Then a part of the human body is adjusted based on the stabilized human body key points. For example, a "waist slimming" function is selected, and a waist slimming degree is adjusted in real time by adjusting a slider of the "waist slimming" function, thereby slimming the waist of the human body, to achieve a more refined beautification effect, which is close to a natural beautification effect that is accepted by a user.

In this embodiment, a stable background is provided for human body key point detection through a box stabilization algorithm, to reduce an error caused by a changed background. With a point stabilization algorithm, a prediction error of points may be eliminated, such that a strong temporal-spatial consistency can be realized between the previous and subsequent video frame images, and a jitter can be reduced. Further, a part of the target human body is adjusted based on the stabilized human body key points, so that an adjusting effect to an object is natural, thereby avoiding a poor processing effect to the target object that is caused by a jitter between previous and subsequent video frames in a video, thus improving the efficiency of processing the target human body.

A body beautification function such as body slimming or leg elongating may be implemented additionally, and a body pendant can be further added, thereby avoiding a disadvantage that manual intervention is needed for a single PS image, which is time-consuming and laborious and limits application scenarios. In addition, with this embodiment, it can also avoid a disadvantage that an unrealistic effect of simply stretching the human body. Therefore, the efficiency of processing an object in a video is improved, and user experience is improved.

For ease of description, the foregoing method embodiments are stated as a series of operations. However, those skilled in the art need to know that this application is not limited to the described sequence of the operations. This is because that according to this application, some steps may be performed in another sequence or may be simultaneously performed. In addition, those skilled in the art need to know that, the embodiments described in the specification are all preferred embodiments and the related operations and modules are not mandatory to this application.

Through the descriptions of the foregoing implementations, those skilled in the art may clearly understand that the method according to the foregoing embodiments may be implemented by means of software and a necessary general hardware platform, and may also be implemented by hardware, but in many cases, the former manner is a better implementation. Based on such an understanding, the technical solutions of this application essentially or the part contributing to the existing technology may be implemented in a form of a software product. The computer software product is stored in a storage medium (such as a read-only medium (ROM)/a random access memory (RAM), a magnetic disk or an optical disc) and includes several instructions for instructing a terminal device (which may be a mobile phone, a computer, a server, a network device, or the like) to perform the methods described in the embodiments of this application.

According to another aspect of the embodiments of this application, a device for positioning an object key point is further provided, which is configured to perform the foregoing method for positioning an object key point. FIG. 15 is a schematic diagram of a device for positioning an object key point according to an embodiment of this application. As shown in FIG. 15, the device 150 for positioning an object key point may include: a detection unit 10, a first acquisition unit 20, a second acquisition unit 30, a positioning unit 40, a third acquisition unit 50, and an adjustment unit 60.

The detection unit 10 is configured to detect a target object in a current video frame of a target video stream, to obtain a current detection region for the target object.

The first acquisition unit 20 is configured to acquire a historic detection region corresponding to the target object in a historic video frame of the target video stream.

The second acquisition unit 30 is configured to acquire a determined current detection region based on the historic detection region and the current detection region.

The positioning unit 40 is configured to perform key point positioning on the target object based on the determined current detection region, to obtain a first object key point set.

The third acquisition unit 50 is configured to acquire a second object key point set corresponding to the target object in the historic video frame of the target video stream.

The adjustment unit 60 is configured to perform stabilization on a position of the first object key point set based on a position of the second object key point set, to obtain a position of a current target object key point set in the current video frame.

The second acquisition unit 30 includes an acquisition module, configured to acquire the determined current detection region based on the historic detection region and the current detection region in a case that the historic video frame is a historic video frame adjacent to the current video frame.

It is to be noted that the detection unit 10 in this embodiment may be configured to perform step S202 in the embodiments of this application, the first acquisition unit 20 in this embodiment may be configured to perform step S204 in the embodiments of this application, the second acquisition unit 30 in this embodiment may be configured to perform step S206 in the embodiments of this application, the positioning unit 40 in this embodiment may be configured to perform step S208 in the embodiments of this application, the third acquisition unit 50 in this embodiment may be configured to perform step S210 in the embodiments of this application, and the adjustment unit 60 in this embodiment may be configured to perform step S212 in the embodiments of this application.

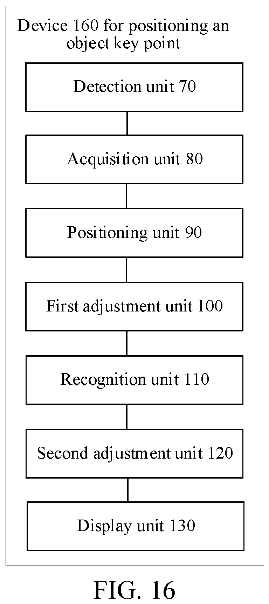

According to another aspect of the embodiments of this application, a device for positioning an object key point is further provided, which is configured to perform the foregoing method for positioning an object key point. FIG. 16 is a schematic diagram of an image processing device according to an embodiment of this application. As shown in FIG. 16, the device 160 for positioning an object key point may include: a detection unit 70, an acquisition unit 80, a positioning unit 90, a first adjustment unit 100, a recognition unit 110, a second adjustment unit 120, and a display unit 130.

The detection unit 70 is configured to detect a target object in a current video frame of a target video stream, to obtain a current detection region for the target object.

The acquisition unit 80 is configured to acquire a determined current detection region based on a historic detection region corresponding to the target object in a historic video frame of the target video stream and the current detection region.

The positioning unit 90 is configured to perform key point positioning on the target object based on the determined current detection region, to obtain a first object key point set.

The first adjustment unit 100 is configured to perform stabilization on a position of the first object key point set based on a position of a second object key point set corresponding to the target object in the historic video frame, to obtain a position of a current target object key point set in the current video frame.

The recognition unit 110 is configured to recognize a part of the target object from the current video frame based on the position of the current target object key point set.

The second adjustment unit 120 is configured to perform adjustment on the recognized part of the target object.

The display unit 130 is configured to display an image of the target object after the adjustment.

It is to be noted that the detection unit 70 in this embodiment may be configured to perform step S402 in the embodiments of this application, the acquisition unit 80 in this embodiment may be configured to perform step S404 in the embodiments of this application, the positioning unit 90 in this embodiment may be configured to perform step S406 in the embodiments of this application, the first adjustment unit 100 in this embodiment may be configured to perform step S408 in the embodiments of this application, the recognition unit 110 in this embodiment may be configured to perform step S410 in the embodiments of this application, the second adjustment unit 120 in this embodiment may be configured to perform step S412 in the embodiments of this application, and the display unit 130 in this embodiment may be configured to perform step S414 in the embodiments of this application.

It is to be noted that examples implemented by the above units and modules and application scenarios are the same as those of the corresponding steps, but the present application is not limited thereto. It is to be noted that, as a part of the device, the foregoing module may be executed in the hardware environment shown in FIG. 1, and may be implemented by software or hardware, where the hardware environment includes a network environment.

According to still another aspect of the embodiments of this application, an electronic device is further provided, which is configured to perform the method for positioning an object key point.

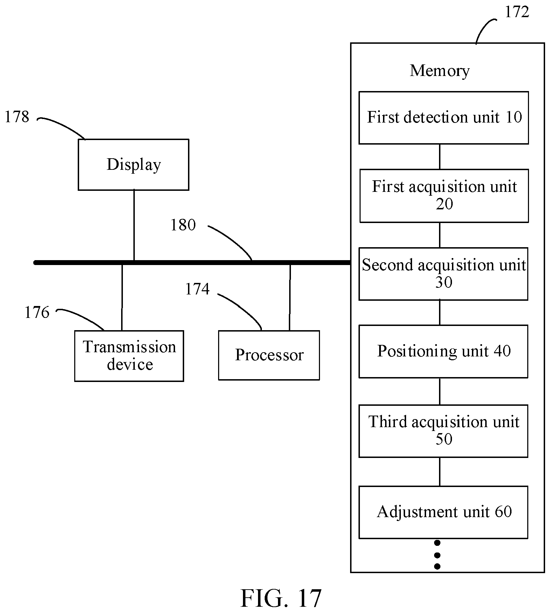

FIG. 17 is a structural block diagram of an electronic device according to an embodiment of this application. As shown in FIG. 17, the electronic device includes a memory 172 and a processor 174. The memory stores a computer program. The processor is configured to perform the steps in any one of the foregoing method embodiments through the computer program.

Preferably, the electronic device may be located in at least one of multiple network devices in a computer network.

Preferably, the processor may be configured to perform steps S206 to S210 shown in FIG. 2 in the foregoing embodiments by executing the computer program.

Preferably, the processor may be configured to perform steps S402 to S412 shown in FIG. 4 in the foregoing embodiments through the computer program.

Preferably, the computer program, when executed, may further perform other steps in the foregoing embodiments. For specific steps, reference may be made to the descriptions in the foregoing embodiments.

Preferably, those skilled in the art may understand that, the structure shown in FIG. 17 is only illustrative. The electronic device may be a terminal device such as a smartphone (for example, an Android mobile phone or an iOS mobile phone), a tablet computer, a palmtop computer, a mobile Internet device (MID), or a PAD. FIG. 17 does not intend to limit the structure of the electronic device. For example, the electronic device may include more or fewer components (such as a network interface) than that shown in FIG. 17, or have a configuration different from that shown in FIG. 17.

The memory 172 may be configured to store a software program and module, for example, a program instruction/module corresponding to the method and device for launching a media in the embodiments of this application. The processor 174 executes various functional applications and performs data processing by executing the software program and module stored in the memory 172, that is, performs the foregoing method for positioning an object key point. The memory 172 may include a high-speed random access memory, and may also include a non-volatile memory, for example, one or more magnetic storage devices, flash memories, or other non-volatile solid state memories. In some examples, the memory 172 may further include memories remotely disposed relative to the processor 174, and the remote memories may be connected to the terminal through a network. Examples of the network include, but are not limited to, the Internet, an intranet, a local area network, a mobile communication network, and a combination thereof. The memory 172 may be specifically configured to, but is not limited to, store information such as video frames of a video, a human body detection box, and object key points. In an example, as shown in FIG. 10, the memory 172 may include, but is not limited to, the adjustment unit 40 in the foregoing device 110 for positioning an object key point. In addition, the memory 172 may also include, but is not limited to, other module units in the device for launching a media, which is not repeated in this example.

The foregoing transmission device 176 is configured to receive or transmit data through a network. Specific examples of the foregoing network can include a wired network and a wireless network. In an example, the transmission device 176 includes a network interface controller (NIC). The NIC may be connected to another network device and a router by using a network cable, to communicate with the Internet or the local network. In an example, the transmission device 176 is a Radio Frequency (RF) module, which is configured to communicate with the Internet in a wireless manner.

In addition, the electronic device further includes: a display 178, configured to display an execution status of the target code in the first target function; and a connection bus 180, configured to connect various module components in the electronic device.

According to still another aspect of the embodiments of this application, a storage medium is further provided. The storage medium stores a computer program, the computer program being configured to perform, when being executed, steps in any one of the foregoing method embodiments.

Preferably, in this embodiment, the storage medium may be configured to store the computer program, and the computer program, when being executed, performs steps S206 to S210 shown in FIG. 2 in the foregoing embodiments.

Preferably, in this embodiment, the storage medium may be configured to store the computer program, and the computer program, when being executed, performs steps S402 to S412 shown in FIG. 4 in the foregoing embodiments.

Preferably, the computer program, when being executed, may perform other steps in the foregoing embodiments. For specific steps, reference may be made to the descriptions in the foregoing embodiments. Preferably, in this embodiment, the foregoing storage medium may include but is not limited to: any medium that can store program code, such as a USB flash drive, a ROM, a RAM, a removable hard disk, a magnetic disk, or a compact disc.

The sequence numbers of the foregoing embodiments of this application are merely used for a description purpose and do not intend to indicate the preference of the embodiments.

When the integrated unit in the foregoing embodiments is implemented in the form of a software functional unit and sold or used as an independent product, the integrated unit may be stored in the foregoing computer-readable storage medium. Based on such an understanding, the technical solution of this application essentially, or a part contributing to the conventional technology, or all or a part of the technical solution may be implemented in a form of a software product. The computer software product is stored in a storage medium and includes several instructions for instructing one or more computer devices (which may be a personal computer, a server, a network device, or the like) to perform all or some of steps of the methods in the embodiments of this application.

In the foregoing embodiments of this application, descriptions of the embodiments have different emphases. As for parts that are not described in detail in one embodiment, reference can be made to the relevant descriptions of the other embodiments.

In the several embodiments provided in this application, it is to be understood that the disclosed client can be implemented in other manners. The device embodiments described above are merely exemplary. For example, the division of the units is merely the division of logic functions, and can use other division manners during actual implementation. For example, multiple units or components can be combined, or can be integrated into another system, or some features can be omitted or not performed. In addition, the coupling, or direct coupling, or communication connection between the displayed or discussed components can be the indirect coupling or communication connection through some interfaces, units, or modules, and can be in electrical or other forms.

The units described as separate parts can or cannot be physically separated. Parts displayed as units can or cannot be physical units, and can be located in one position, or can be distributed on multiple network units. Some or all of the units can be selected according to actual requirements to achieve the objectives of the solutions in the embodiments.

In addition, functional units in the embodiments of this application can be integrated into one processing unit, or each of the units can exist alone physically, or two or more units are integrated into one unit. The foregoing integrated unit can be implemented in the form of hardware, or can be implemented in the form of a software function unit.

The foregoing descriptions are merely exemplary implementations of this application. A person of ordinary skill in the art can further make several improvements and refinements without departing from the principle of this application, and the improvements and refinements shall fall within the protection scope of this application.

**Claims**

1.  A method for positioning an object key point, wherein the method is applied to a terminal device, and the method comprises:

    detecting a target object in a current video frame of a target video stream, to obtain a current detection region for the target object;
    acquiring a historic detection region corresponding to the target object in a historic video frame of the target video stream;
    adjusting the current detection region based on the historic detection region, to obtain a determined current detection region;
    performing key point positioning on the target object based on the determined current detection region, to obtain a first object key point set;
    acquiring a second object key point set corresponding to the target object in the historic video frame of the target video stream; and
    performing stabilization on a position of the first object key point set based on a position of the second object key point set, to obtain a position of a current target object key point set in the current video frame.

2.  The method according to claim 1, wherein the adjusting the current detection region based on the historic detection region, to obtain a determined current detection region comprises:

    determining an intersection-over-union between the historic detection region and the current detection region;
    determining the historic detection region as the determined current detection region in a case that the intersection-over-union is greater than a target threshold; and
    determining the current detection region as the determined current detection region in a case that the intersection-over-union is less than or equal to the target threshold.

3.  The method according to claim 1, wherein the performing stabilization on a position of the first object key point set based on a position of the second object key point set, to obtain a position of a current target object key point set in the current video frame comprises:
    performing coordinate smoothing on the position of the first object key point set based on the position of the second object key point set, to obtain the position of the current target object key point set in the current video frame.

4.  The method according to claim 3, wherein the performing coordinate smoothing on the position of the first object key point set based on the position of the second object key point set, to obtain the position of the current target object key point set in the current video frame comprises:

    determining a position of a first target object key point that is to be stabilized from the first object key point set;
    determining a position of a second target object key point, that is located corresponding to a part indicated by the first target object key point, from the second object key point set;
    performing weighting on the determined position of the second target object key point and the corresponding position of the first target object key point, to obtain a weighted sum;
    determining a target coefficient based on a frame rate of the target video stream; and
    performing smoothing on the position of the first target object key point based on the weighted sum and the target coefficient, to obtain a stabilized position of the first target object key point.

5.  The method according to claim 1, wherein the detecting a target object in a current video frame of a target video stream, to obtain a current detection region for the target object comprises:

detecting the current video frame, to obtain a plurality of first candidate detection regions; and
determining, from the plurality of first candidate detection regions, a first candidate detection region having a maximum intersection-over-union with the historic detection region as the current detection region.

6. The method according to any one of claims 1 to 5, wherein before the detecting a target object in a current video frame of a target video stream, to obtain a current detection region for the target object, the method further comprises:

detecting a first video frame of the target video stream, to obtain a plurality of second candidate detection regions;
determining, from the plurality of second candidate detection regions, a second candidate detection region having a maximum confidence as a detection region corresponding to the first video frame, wherein the detection region corresponding to the first video frame serves as a historic detection region of another video frame in the target video stream.

7. The method according to any one of claims 1 to 5, wherein the performing key point positioning on the target object based on the determined current detection region, to obtain a first object key point set comprises:

expanding, in a case that the target object in the current video frame is partially located in the determined current detection region, the determined current detection region by centering on a center of the determined current detection region, to obtain a target detection region; and
acquiring the first object key point set based on a target image of the target object comprised in the target detection region.

8. The method according to claim 7, wherein the acquiring the first object key point set based on a target image of the target object comprised in the target detection region comprises:

processing the target image to obtain a plurality of groups of confidences of the first object key point set, each group of confidences being used for predicting a position of an object key point in the first object key point set;
constructing a target matrix with each group of confidences;
determining first target coordinate based on a row and a column of a maximum confidence in each group of confidences in the target matrix; and
determining a position of the object key point in the first object key point set based on the first target coordinate.

9. The method according to claim 8, wherein the determining the position of the object key point in the first object key point set based on the first target coordinate comprises:

determining second target coordinate based on a row and a column of a sub-maximum confidence in each group of confidences in the target matrix;
offsetting the first target coordinate toward the second target coordinate by a target distance; and
determining, based on the second target coordinate that is offset by the target distance, a position of the object key point on the target object that corresponds to the target matrix.

10. An image processing method, comprising:

detecting a target object in a current video frame of a target video stream, to obtain a current detection region for the target object;
adjusting the current detection region based on a historic detection region corresponding to the target object in a historic video frame of the target video stream, to obtain a determined current detection region;
performing key point positioning on the target object based on the determined current detection region, to obtain a first object key point set;
performing stabilization on a position of the first object key point set based on a position of a second object key point set corresponding to the target object in the historic video frame, to obtain a position of a current target object key point set in the current video frame;
recognizing a part of the target object from the current video frame based on the position of the current target object key point set;
performing adjustment on the recognized part of the target object; and
displaying an image of the target object after the adjustment.

11. The method according to claim 10, wherein the adjusting the current detection region based on a historic detection region corresponding to the target object in a historic video frame of the target video stream, to obtain a determined current detection region comprises:

> determining an intersection-over-union between the historic detection region and the current detection region;
> determining the historic detection region as the determined current detection region in a case that the intersection-over-union is greater than a target threshold; and
> determining the current detection region as the determined current detection region in a case that the intersection-over-union is less than or equal to the target threshold.

12. The method according to claim 10, wherein the performing stabilization on a position of the first object key point set based on a position of a second object key point set corresponding to the target object in the historic video frame, to obtain a position of a current target object key point set in the current video frame comprises:
performing coordinate smoothing on the position of the first object key point set based on the position of the second object key point set, to obtain the position of the current target object key point set in the current video frame.

13. The method according to claim 12, wherein the performing coordinate smoothing on the position of the first object key point set based on the position of the second object key point set, to obtain the position of the current target object key point set in the current video frame comprises:

> determining a position of a first target object key point that is to be stabilized from the first object key point set;
> determining a position of a second target object key point, that is located corresponding to a part indicated by the first target object key point, from the second object key point set;
> performing weighting on the determined position of the second target object key point and the corresponding position of the first target object key point, to obtain a weighted sum;
> determining a target coefficient based on a frame rate of the target video stream; and
> performing smoothing on the position of the first target object key point based on the weighted sum and the target coefficient, to obtain a stabilized position of the first target object key point.

14. The method according to claim 10, wherein the detecting a target object in a current video frame of a target video stream, to obtain a current detection region for the target object comprises:

> detecting the current video frame, to obtain a plurality of first candidate detection regions; and
> determining, from the plurality of first candidate detection regions, a first candidate detection region having a maximum intersection-over-union with the historic detection region as the current detection region.

15. The method according to any one of claims 10 to 14, wherein before the detecting a target object in a current video frame of a target video stream, to obtain a current detection region for the target object, the method further comprises:

> detecting a first video frame of the target video stream, to obtain a plurality of second candidate detection regions; and
> determining, from the plurality of second candidate detection regions, a second candidate detection region having a maximum confidence as a detection region corresponding to the first video frame, wherein the detection region corresponding to the first video frame serves as a historic detection region of another video frame in the target video stream.

16. The method according to any one of claims 10 to 14, wherein the performing key point positioning on the target object based on the determined current detection region, to obtain a first object key point set comprises:

> expanding, in a case that the target object in the current video frame is partially located in the determined current detection region, the determined current detection region by centering on a center of the determined current detection region, to obtain a target detection region; and
> acquiring the first object key point set based on a target image of the target object comprised in the target detection region.

17. The method according to claim 16, wherein the acquiring the first object key point set based on a target image of the target object comprised in the target detection region comprises:

> processing the target image to obtain a plurality of groups of confidences of the first object key point set, each group of confidences being used for predicting a position of an object key point in the first object key point set;

constructing a target matrix with the each group of confidences;

determining first target coordinate based on a row and a column of a maximum confidence in each group of confidences in the target matrix; and

determining a position of the object key point in the first object key point set based on the first target coordinate.

18. The method according to claim 17, wherein the determining a position of the object key point in the first object key point set based on the first target coordinate comprises:

determining second target coordinate based on a row and a column of a sub-maximum confidence in each group of confidences in the target matrix;

offsetting the first target coordinate toward the second target coordinate by a target distance; and

determining, based on the second target coordinate that is offset by the target distance, a position of the object key point on the target object that corresponds to the target matrix.

19. A device for positioning an object key point, comprising:

a memory configured to store a computer program; and

a processor configured to execute the computer program, to perform the following operations of:

detecting a target object in a current video frame of a target video stream, to obtain a current detection region for the target object;

acquiring a historic detection region corresponding to the target object in a historic video frame of the target video stream;

adjusting the current detection region based on the historic detection region, to obtain a determined current detection region;

performing key point positioning on the target object based on the determined current detection region, to obtain a first object key point set;

acquiring a second object key point set corresponding to the target object in the historic video frame of the target video stream; and

performing stabilization on a position of the first object key point set based on a position of the second object key point set, to obtain a position of a current target object key point set in the current video frame.

20. The device according to claim 19, wherein for adjusting the current detection region based on the historic detection region, to obtain a determined current detection region, the processor is further configured to perform the following operations of:

determining an intersection-over-union between the historic detection region and the current detection region;

determining the historic detection region as the determined current detection region in a case that the intersection-over-union is greater than a target threshold; and

determining the current detection region as the determined current detection region in a case that the intersection-over-union is less than or equal to the target threshold.

21. The device according to claim 19, wherein for performing stabilization on a position of the first object key point set based on a position of the second object key point set, to obtain a position of a current target object key point set in the current video frame, the processor is further configured to perform the following operation of:

performing coordinate smoothing on the position of the first object key point set based on the position of the second object key point set, to obtain the position of the current target object key point set in the current video frame.

22. The device according to claim 21, wherein for performing coordinate smoothing on the position of the first object key point set based on the position of the second object key point set, to obtain the position of the current target object key point set in the current video frame, the processor is further configured to perform the following operations of:

determining a position of a first target object key point that is to be stabilized from the first object key point set;

determining a position of a second target object key point, that is located corresponding to a part indicated by the first target object key point, from the second object key point set;

performing weighting on the determined position of the second target object key point and the corresponding position of the first target object key point, to obtain a weighted sum;

determining a target coefficient based on a frame rate of the target video stream; and

performing smoothing on the position of the first target object key point based on the weighted sum and the target coefficient, to obtain a stabilized position of the first target object key point.

23. The device according to claim 19, wherein for detecting a target object in a current video frame of a target video stream, to obtain a current detection region for the target object, the processor is further configured to perform the following operations of:

detecting the current video frame, to obtain a plurality of first candidate detection regions; and

determining, from the plurality of first candidate detection regions, a first candidate detection region having a maximum intersection-over-union with the historic detection region as the current detection region.

24. An image processing device, comprising:

a display;

a memory configured to store a computer program; and

a processor configured to execute the computer program, to perform the following operations of:

detecting a target object in a current video frame of a target video stream, to obtain a current detection region for the target object;

adjusting the current detection region based on a historic detection region corresponding to the target object in a historic video frame of the target video stream, to obtain a determined current detection region;

performing key point positioning on the target object based on the determined current detection region, to obtain a first object key point set;

performing stabilization on a position of the first object key point set based on a position of a second object key point set corresponding to the target object in the historic video frame, to obtain a position of a current target object key point set in the current video frame;

recognizing a part of the target object from the current video frame based on the position of the current target object key point set;

performing adjustment on the recognized part of the target object; and

controlling the display to display an image of the target object after the adjustment.

25. The image processing device according to claim 24, wherein for adjusting the current detection region based on a historic detection region corresponding to the target object in a historic video frame of the target video stream, to obtain a determined current detection region, the processor is further configured to perform the following operations of:

determining an intersection-over-union between the historic detection region and the current detection region;

determining the historic detection region as the determined current detection region in a case that the intersection-over-union is greater than a target threshold; and

determining the current detection region as the determined current detection region in a case that the intersection-over-union is less than or equal to the target threshold.

26. The image processing device according to claim 24, wherein for performing stabilization on a position of the first object key point set based on a position of a second object key point set corresponding to the target object in the historic video frame, to obtain a position of a current target object key point set in the current video frame, the processor is further configured to perform the following operation of:

performing coordinate smoothing on the position of the first object key point set based on the position of the second object key point set, to obtain the position of the current target object key point set in the current video frame.

27. The image processing device according to claim 24, wherein for performing coordinate smoothing on the position of the first object key point set based on the position of the second object key point set, to obtain the position of the current target object key point set in the current video frame, the processor is further configured to perform the following operations of:

determining a position of a first target object key point that is to be stabilized from the first object key point set;

determining a position of a second target object key point, that is located corresponding to a part indicated by the first target object key point, from the second object key point set;

performing weighting on the determined position of the second target object key point and the corresponding position of the first target object key point, to obtain a weighted sum;
determining a target coefficient based on a frame rate of the target video stream; and
performing smoothing on the position of the first target object key point based on the weighted sum and the target coefficient, to obtain a stabilized position of the first target object key point.

28. The image processing device according to claim 24, wherein for detecting a target object in a current video frame of a target video stream, to obtain a current detection region for the target object, the processor is further configured to perform the following operations of:

detecting the current video frame, to obtain a plurality of first candidate detection regions; and
determining, from the plurality of first candidate detection regions, a first candidate detection region having a maximum intersection-over-union with the historic detection region as the current detection region.

29. A storage medium comprising a computer program stored therein, the computer program being configured to perform, when being executed, the method for positioning an object key point according to any one of claims 1 to 9 or the image processing method according to any one of claims 10 to 18.

FIG. 1

Detect a target object in a current video frame of a target video stream, to obtain a current detection region for the target object — S202

Acquire a historic detection region corresponding to the target object in a historic video frame of the target video stream — S204

Acquire a determined current detection region based on the historic detection region and the current detection region — S206

Perform key point positioning on the target object based on the determined current detection region, to obtain a first object key point set — S208

Acquire a second object key point set corresponding to the target object in the historic video frame of the target video stream — S210

Perform stabilization on a position of the first object key point set based on a position of the second object key point set, to obtain a position of a current target object key point set in the current video frame — S212

FIG. 2

EP 3 885 967 A1

Nth object key
point set

Key point A_m ──────── Key point A_2 ──── Key point A_1 ────▶ Key point a_N ▶ A_N

Key point B_m ──────── Key point B_2 ──── Key point B_1 ────▶ Key point b_N ▶ B_N

Key point Z_m ──────── Key point Z_2 ──── Key point Z_1 ────▶ Key point z_N ▶ Z_N

To-be-determined
object key point
set

Key point A_m ──────── Key point A_2 ──── Key point A_1 ────▶ Key point a_{N+1}
                                                              ▼
                                                              Key point A_{N+1}

Key point B_m ──────── Key point B_2 ──── Key point B_1 ────▶ Key point b_{N+1}
                                                              ▼
                                                              Key point B_{N+1}

Key point Z_m ──────── Key point Z_2 ──── Key point Z_1 ────▶ Key point z_{N+1}
                                                              ▼
                                                              Key point Z_{N+1}

2nd second object key point set
{Key point A_2, Key point B_2, ..., Key point Z_2}

mth second object key point set
{Key point A_m, Key point B_m, ..., Key point Z_m}

1st second object key point set
{Key point A_1, Key point B_1, ..., Key point Z_1}

| (N-m)th video frame | ... | (N-2)th video frame | (N-1)th video frame | Nth video frame | (N+1)th video frame | (N+2)th video frame | ... | (N+n)th video frame |

Target video stream

| mth historic detection region | ... | Second historic detection region | First historic detection region | Determined current detection region | To-be-determined detection region |

Current detection region

FIG. 3

Detect a target object in a current video frame of a target video stream, to obtain a current detection region for the target object — S402

Acquire a determined current detection region Based on a historic detection region corresponding to the target object in a historic video frame of the target video stream and the current detection region — S404

Perform key point positioning on the target object based on the determined current detection region, to obtain a first object key point set — S406

Perform stabilization on a position of the first object key point set based on a position of a second object key point set corresponding to the target object in the historic video frame, to obtain a position of a current target object key point set in the current video frame — S408

Recognize a part of the target object from the current video frame based on the position of the current target object key point set — S410

Perform adjustment on the recognized part of the target object — S412

Display an image of the target object after the adjustment — S414

FIG. 4

| | |
|---|---|
| Input a video frame image | S501 |

↓

| | |
|---|---|
| Detect the current video frame image through a human body detection algorithm, to obtain a current human body detection box | S502 |

↓

| | |
|---|---|
| Stabilize the human body detection box of the current video frame image based on a detection result of a previous video frame image, to obtain a stabilized current human body detection box, and buffer the stabilized current human body detection box | S503 |

↓

| | |
|---|---|
| Input a partial human body region of interest into a human body key point detection algorithm, to obtain a first human body key point set | S504 |

↓

| | |
|---|---|
| Stabilize the first human body key point of the current video frame image based on a detection result of the historic video frame image, to obtain a second human body key point set, and buffer the second human body key point set | S505 |

FIG. 5

B2

B0

A

B1

FIG. 6

FIG. 7

Heat map

Image

FIG. 8

FIG. 9

FIG. 10

FIG. 11

FIG. 12

EP 3 885 967 A1

FIG. 13

40

Comparison diagram before and
after body slimming

FIG. 14

Device 150 for positioning
an object key point

Detection unit 10

First acquisition unit 20

Second acquisition unit 30

Positioning unit 40

Third acquisition unit 50

Adjustment unit 60

FIG. 15

Device 160 for positioning an
object key point

Detection unit 70

Acquisition unit 80

Positioning unit 90

First adjustment unit 100

Recognition unit 110

Second adjustment unit 120

Display unit 130

FIG. 16

172

Memory

First detection unit 10

First acquisition unit 20

Second acquisition unit 30

Positioning unit 40

Third acquisition unit 50

Adjustment unit 60

178

Display

180

176

174

Transmission device

Processor

FIG. 17

## INTERNATIONAL SEARCH REPORT

| International application No. |
| --- |
| **PCT/CN2019/113611** |

| A. | CLASSIFICATION OF SUBJECT MATTER |
| --- | --- |

G06K 9/00(2006.01)i

According to International Patent Classification (IPC) or to both national classification and IPC

| B. | FIELDS SEARCHED |
| --- | --- |

Minimum documentation searched (classification system followed by classification symbols)

G06K; G06T

Documentation searched other than minimum documentation to the extent that such documents are included in the fields searched

Electronic data base consulted during the international search (name of data base and, where practicable, search terms used)

CNABS, CNTXT, CNKI, VEN, 物体, 目标, 关键点, 定位, 位置, 视频, 图像, 帧, 检测, 区域, 框, 集, 调整, object, target, key w point, position+, video, image, frame, detect+, area, box, set, adjust+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 109684920 A (TENCENT TECHNOLOGY SHENZHEN CO., LTD.) 26 April 2019 (2019-04-26)<br>description, paragraphs 4-316 | 1-29 |
| X | CN 106778585 A (TENCENT TECHNOLOGY (BEIJING) COMPANY LIMITED) 31 May 2017 (2017-05-31)<br>description, paragraphs 5-16 | 1-29 |
| A | CN 108230357 A (BEIJING SENSETIME TECHNOLOGY DEVELOPMENT CO., LTD.) 29 June 2018 (2018-06-29)<br>entire document | 1-29 |
| A | CN 106682619 A (SHANGHAI MROBOT TECHNOLOGY CO., LTD.) 17 May 2017 (2017-05-17)<br>entire document | 1-29 |
| A | CN 105512627 A (TENCENT TECHNOLOGY SHENZHEN CO., LTD.) 20 April 2016 (2016-04-20)<br>entire document | 1-29 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 January 2020** | **05 February 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/113611**

| Patent document cited in search report | | | Publication date (day/month/year) | Patent family member(s) | | | Publication date (day/month/year) |
|---|---|---|---|---|---|---|---|
| CN | 109684920 | A | 26 April 2019 | None | | | |
| CN | 106778585 | A | 31 May 2017 | US | 2019205623 | A1 | 04 July 2019 |
| | | | | CN | 106778585 | B | 16 April 2019 |
| | | | | WO | 2018103525 | A1 | 14 June 2018 |
| CN | 108230357 | A | 29 June 2018 | None | | | |
| CN | 106682619 | A | 17 May 2017 | None | | | |
| CN | 105512627 | A | 20 April 2016 | CN | 105512627 | B | 12 April 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811377195